# EUROPEAN PATENT APPLICATION

(11) **EP 4 122 698 A1**
(43) Date of publication of application: **25.01.2023**
(21) Application number: 21770785.0
(22) Date of filing: 11.03.2021
(51) Int. Cl.: B32B 7/023, B32B 3/26, B32B 3/30, B41M 1/34, B41M 3/06, B44F 1/04, C03C 27/12

(54) **MULTILAYER BODY**

(30) Priority: 19.03.2020 JP 2020049285
(71) Applicant: AGC INC., Chiyoda-ku, Tokyo 1008405 (JP)
(72) Inventor: HAYAMI, Yutaka, Tokyo 100-8405 (JP)
(74) Representative: Müller-Boré & Partner Patentanwälte PartG mbB
(86) International application number: PCT/JP2021/009748
(87) International publication number: WO 2021/187301

(57) **Abstract**

The present invention provides a laminate that has a designability superior to the conventional one. A laminate (1) including: a reflective layer (22); and a first tinted layer (50) and a second tinted layer (60) formed to sandwich the reflective layer in a cross-sectional view, in which: at least one of the first tinted layer and the second tinted layer is translucent; the first tinted layer includes a tinted portion (51, 52) that absorbs light of at least a part of a wavelength range from 390 to 620 nm; and the second tinted layer includes, in a position opposite to the tinted portion of the first tinted layer, a tinted portion (61, 62) that absorbs light of at least a part of a wavelength range from 390 to 620 nm and exhibits a color different from the tinted portion of the first tinted layer.

## Description

### Technical Field

The present invention relates to a laminate.

### Background Art

Glass plates, which have high durability and smoothness in the surfaces and are excellent in designability due to their texture, and reflection or the like, are widely used for such as buildings and interiors. Furthermore, in recent years, glass materials with higher designability have been increasingly demanded in the application such as building materials including window materials, flooring materials, wall materials, and ceiling materials; interior materials such as table tops; exterior materials of white goods including washing machines and refrigerators; interior and exterior materials of an automotive such as a vehicle; and electronic devices such as a mobile phone and a portable digital assistant (PDA). The application of glass materials with higher designability is expected to increase even further from now on.

Under such a background, a laminated glass has been proposed in which different kinds of materials other than glass, such as a polyethylene terephthalate (PET) film for printing, paper such as Japanese paper, cloth, metal, marble, wood, a pressed flower, and leaf veins are enclosed inside. Such laminated glass is a five-layered structure consisting of a glass plate/a translucent resin film (interlayer film)/a different kind of material/a translucent resin film (interlayer film)/a glass plate, as a basic structure. By visually recognizing the different kind of materials through a front surface of the glass plate, a design with excellent in appearance can be achieved.

The different kinds of materials include a color, a design pattern, and a pattern or the like, and can function as a design layer. For example, Patent Literature 1 discloses a laminate having a five-layered structure constituted by stacking a glass plate/an adhesive film/a projected plate backing sheet/an adhesive film/a glass plate (Claim 1).

In the foregoing application, a glass plate of a back side is not essential. Further, instead of a glass plate, any substrate of as a translucent resin plate or the like may be used. Regarding a laminate including a design layer, high value-added various products have been requiring more sophisticated designability.

### Citation List

### Patent Literature

Patent Literature 1: Japanese Examined Patent Application Publication No. H08-015770
Patent Literature 2: International Patent Publication No. WO 2018/221326
Patent Literature 3: Japanese Unexamined Patent Application Publication No. 2008-018631
Patent Literature 4: Japanese Unexamined Patent Application Publication No. 2015-120328

### Summary of Invention

### Technical Problem

The inventor of the present invention has proposed an uneven structural body including an uneven layer having a fine uneven pattern designed to have reflection factor anisotropy and a laminate including the uneven structural body in Patent Literature 2 and the like. Concerning an uneven structural body or a laminate including the uneven structural body that has been proposed by the inventor of the present invention, when the angle of a visual line or a light source changes, a change in the brightness is different according to the in-plane position. Thus, a variety of changes in contrast can be observed, exhibiting superior designability.

As related technologies of the present invention, the following Patent Literatures 3 and 4 are exemplified.

Patent Literature 3 discloses a bright ornament including: a transparent substrate; a plurality of blocks consisting of linear convex transparent projections arranged on the back surface of the transparent substrate in parallel; and a light reflective layer arranged so as to cover the plurality of blocks on the back surface of the transparent substrate, and in which each block of the plurality of blocks has a different extending direction of the linear convex transparent projection from at least one of the adjacent blocks (Claim 1).

Patent Literature 4 discloses a printed matter of a changing image which can change the visibility of a pattern on the printed substrate depending on the viewing angle by forming a plurality of pattern line drawings through changing a length, a spacing, a line width or an angle with respect to each line of the line drawings of an array of straight or curved lines that do not overlap with each other and by printing these combined pattern line drawings over the whole surface on a print substrate with ink to form a line drawing having a mountain-shaped cross section (Claim 1).

Patent Literatures 3 and 4 do not provide any disclosure regarding a first tinted layer and a second tinted layer exhibiting different colors, formed to sandwich the uneven structural body in a cross-sectional view.

The present invention has been made in view of the above situation, and an object of the present invention is to provide a laminate in which, when an angle of the laminate, a visual line, or a light source changes, a change in the brightness is different according to the in-plane position, leading to various changes in contrast, and the color is changed depending on the in-plane position, resulting in more complex changes in appearance, more stereoscopic visualization, and a further superior designability.

### Solution to Problem

A laminate according to the present invention includes:
a reflective layer; and
a first tinted layer and a second tinted layer formed to sandwich the reflective layer in a cross-sectional view, in which:
   at least one of the first tinted layer and the second tinted layer is translucent;
   the first tinted layer includes a tinted portion that absorbs light of at least a part of a wavelength range from 390 to 620 nm; and
   the second tinted layer includes, in a position opposite to the tinted portion of the first tinted layer, a tinted portion that absorbs light of at least a part of a wavelength range from 390 to 620 nm and exhibits a color different from the tinted portion of the first tinted layer.

### Advantageous Effects of Invention

In the laminate according to the present invention, when an angle of the laminate, a visual line, or a light source changes, a change in the brightness is different according to the in-plane position, leading to various changes in contrast, and the color is changed depending on the in-plane position, resulting in more complex changes in appearance, more stereoscopic visualization, and a further superior designability.

### Brief Description of Drawings

Fig. 1 is a schematic cross-sectional view of a laminate according to a first embodiment of the present invention;
Fig. 2 is a schematic cross-sectional view of a laminate according to a second embodiment of the present invention;
Fig. 3 is a schematic cross-sectional view of a laminate according to a third embodiment of the present invention;
Fig. 4 is a schematic cross-sectional view of a laminate according to a fourth embodiment of the present invention;
Fig. 5 is a schematic cross-sectional view of a laminate according to a fifth embodiment of the present invention;
Fig. 6 is a drawing showing an example of a planar pattern of one protruding or recessed portion in a planar pattern according to the first embodiment of the present invention;
Fig. 7 is a drawing showing an example of patterns of a plurality of protruding or recessed portions in meandering line shapes in a plan view, arranged such that curved portions of adjacent protruding or recessed portions are adjacent;
Fig. 8 is a plan view showing a first example of a pattern of the plurality of protruding portions of an uneven layer that looks like faceted glass;
Fig. 9 is a plan view showing a second example of a pattern of the plurality of protruding portions of the uneven layer that looks like faceted glass;
Fig. 10 is a plan view showing a third example of a pattern of the plurality of protruding portions of the uneven layer that looks like faceted glass;
Fig. 11 is a plan view showing a fourth example of a pattern of the plurality of protruding portions of the uneven layer that looks like faceted glass;
Fig. 12 is a plan view showing a fifth example of a pattern of the plurality of protruding portions of the uneven layer that looks like faceted glass;
Fig. 13A is an example of a schematic plan view of one protruding or recessed portion in a meandering line shape in a plan view included in the uneven layer of the uneven structural body;
Fig. 13B is another example of a schematic plan view of one protruding or recessed portion in a meandering line shape in a plan view included in the uneven layer of the uneven structural body;
Fig. 14A is a schematic plan view showing a first example of a planar pattern of the plurality of protruding or recessed portions SC;
Fig. 14B is a drawing showing an example of a virtual straight line group connecting specific poles of the plurality of protruding or recessed portions in the pattern shown in Fig. 14A;
Fig. 15A is a schematic plan view showing a second example of a planar pattern of the plurality of protruding or recessed portions SC;
Fig. 15B is a drawing showing an example of a virtual straight line group connecting specific poles of the plurality of protruding or recessed portions in the pattern shown in Fig. 15A;
Fig. 16 is a schematic plan view showing a third example of a planar pattern of the plurality of protruding or recessed portions SC;
Fig. 17 is a schematic plan view showing a fourth example of a planar pattern of the plurality of protruding or recessed portions SC;
Fig. 18 is a graph showing an example of relationship between the number x of the virtual straight line and an angle of the virtual straight line in any virtual straight line group, in each of the patterns shown in Fig. 14A, Fig. 15A, and Fig. 17;
Fig. 19 is a graph showing an example of relationship between the number x of the protruding or recessed portion and the number of specific poles included in one protruding or recessed portion in each of the patterns shown in Fig. 14A, Fig. 15A, Fig. 16, and Fig. 17;
Fig. 20 is a schematic cross-sectional view in an array direction of a plurality of recessed portions of a die produced in the section "Examples".
Fig. 21A is a reflective spectrum of a fourth laminate (LD11) ; and
Fig. 21B is a transmission spectrum of a fourth laminate (LD11).

### Description of Embodiments

In the present specification, a "visible light range" is defined to be a wavelength range from 390 to 620 nm, unless otherwise specified.

In the present specification, a spaced distance between the recessed portions adjacent to each other is referred to as an "inter-recessed portion distance", while a spaced distance between the protruding portions adjacent to each other is referred to as an "inter-protruding portion distance".

In the present specification, the width and the pitch of the protruding or recessed portion are the width and the pitch thereof in the array direction of the plurality of protruding or recessed portions. Similarly, the inter-protruding portion distance is an inter-protruding portion distance in the array direction of the plurality of protruding portions, and the inter-recessed portion distance is an inter-recessed portion distance in the array direction of the plurality of recessed portions.

Typically, a thin film structure is referred to as a "film" or a "sheet", depending on the thickness thereof. In the present specification, no clear distinction is made between these. Therefore, the "film" may include the "sheet", and the "sheet" may include the "film".

In the present specification, the expression "from ... to" indicating a numerical range is used in such a sense inclusive of the numerical values specified therewith as a lower limit value and an upper limit value, unless otherwise specified.

Embodiments of the present invention are described hereinafter.

### [Laminate]

A laminate according to the present invention includes:
a reflective layer; and
a first tinted layer and a second tinted layer formed to sandwich the reflective layer in a cross-sectional view, in which:
   at least one of the first tinted layer and the second tinted layer is translucent;
   the first tinted layer includes a tinted portion that absorbs light of at least a part of a wavelength range from 390 to 620 nm; and
   the second tinted layer includes, in a position opposite to the tinted portion of the first tinted layer, a tinted portion that absorbs light of at least a part of a wavelength range from 390 to 620 nm and exhibits a color different from the tinted portion of the first tinted layer.

In an embodiment of the laminate according to the present invention, the laminate may include an uneven structural body between the first tinted layer and the second tinted layer, the uneven structural body containing a resin and having on a surface an uneven layer with at least three linear protruding or recessed portions formed side-by-side at a pitch of no greater than 1,000 µm in a plan view.

In a first aspect, a resin layer may be overlaid immediately above the uneven layer of the uneven structural body, with spaces inside the recessed portions of the uneven layer being left as gas portions. In this case, a layer composed of the uneven layer of the uneven structural body and the gas portions can serve as the reflective layer.

In a second aspect, the reflective layer may be translucent and is formed to have an uneven surface along an uneven surface of the uneven layer of the uneven structural body.

In this aspect, one of the first tinted layer and the second tinted layer may be formed in contact with the uneven surface of the reflective layer. It is preferred that one of the first tinted layer and the second tinted layer on a visually recognized side is formed in contact with the uneven surface of the reflective layer.

### (First Embodiment of Laminate Structure)

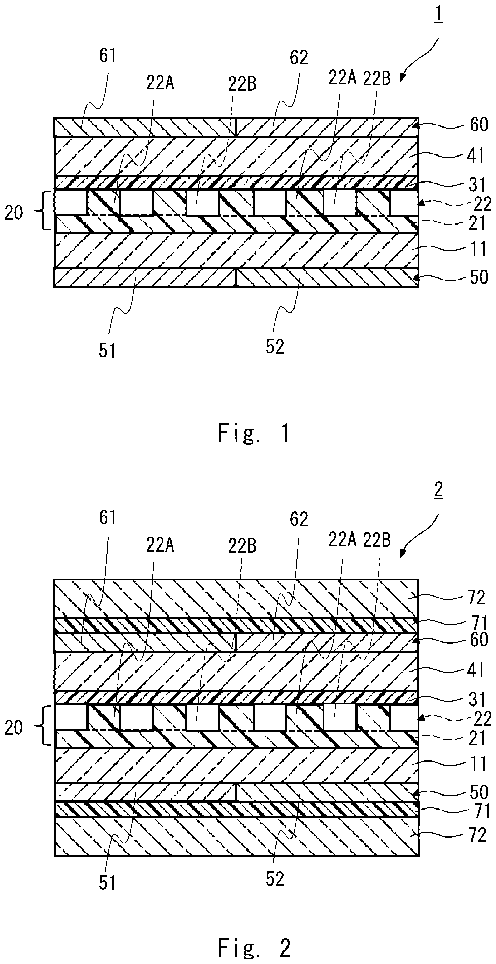

The structure of a laminate according to the first embodiment of the present invention is described with reference to the drawings. Fig. 1 is a schematic cross-sectional view of the laminate according to the present embodiment.

A laminate 1 of the present embodiment includes a translucent uneven structural body 20 that includes an uneven layer with a plurality of protruding or recessed portions that are linear in a plan view.

In the present embodiment, the uneven structural body 20 is composed of a first flat layer 21 and an uneven layer 22 formed integrally with the first flat layer 21. The uneven layer 22 is composed of a plurality of protruding portions 22A and a plurality of recessed portions 22B formed in gaps between the plurality of protruding portions 22A. In the present embodiment, a second flat layer 31 is overlaid immediately above the uneven layer 22, with spaces inside the recessed portions 22B of the uneven layer 22 being left as gas portions.

Of the first flat layer 21 and the second flat layer 31, at least the layer positioned on a visually recognized side with respect to the uneven layer 22 is translucent.

It is preferred that the uneven layer 22 is a gas-resin composite layer including the plurality of gas portions formed inside the plurality of recessed portions 22B and a plurality of resin portions (the plurality of protruding portions) separating the plurality of gas portions from each other. In the present embodiment, the gas-resin composite layer can serve as the reflective layer.

It is preferred that the first flat layer 21 is the first resin layer, the second flat layer 31 is the second resin layer, and the gas-resin composite layer is interposed between these two flat resin layers. At least one of the first flat layer 21 and the second flat layer 31 may be a layer including a pressure sensitive adhesive layer.

In the aspect shown in Fig. 1, all of the protruding portions 22A are formed integrally with the first flat layer 21 on a lower side of the drawing; however, at least a part of the protruding portions 22A may be formed integrally with the second flat layer 31 on an upper side of the drawing.

In the present embodiment, the protruding portion 22A or the recessed portion 22B are linear in a plan view, and the plurality of protruding portions 22A or the plurality of recessed portions 22B are formed side-by-side at a pitch of no greater than 1,000 µm.

The protruding portion 22A or the recessed portion 22B which are linear in a plan view may be straight, curved, or a combination of at least one curved portion and at least one straight portion in a plan view.

Each protruding portion 22A or each recessed portion 22B has preferably at least one curved portion in a plan view, more preferably a plurality of curved portions, and particularly preferably a meandering line shape.

In the uneven layer 22, in a plan view, the plurality of protruding portions 22A or recessed portions 22B are formed side-by-side at a pitch no greater than 1,000 µm in the order from first to n-th.

Note that n is an integer of 3 or greater, preferably 10 or greater, more preferably 100 or greater, and particularly preferably 1,000 or greater. The upper limit of n is not particularly limited, and is preferably 10,000,000 or less, and more preferably 1,000,000 or less.

The pitch is preferably as small as possible, preferably 100 µm or less, and more preferably 50 µm or less.

In the case in which the protruding portion 22A or the recessed portion 22B has at least one curved portion, a bending angle of the curved portion is preferably from 30 to 150°, more preferably from 50 to 130°, particularly preferably from 70 to 110°, and most preferably 90°.

The laminate 1 may include, as needed, a supporting member 11 made of resin or glass that supports the first flat layer 21, and/or a supporting member 41 made of resin or glass that supports the second flat layer 31.

The laminate 1 of the present embodiment includes a first tinted layer 50 and a second tinted layer 60 formed to sandwich the uneven structural body 20 in a cross-sectional view.

In the example illustrated in the drawing, the first tinted layer 50 is formed on an outer face (face on an opposite side to the uneven structural body 20) of the supporting member 11, while the second tinted layer 60 is formed on an outer face (face on an opposite side to the uneven structural body 20) of the supporting member 41. The positions where the first tinted layer 50 and the second tinted layer 60 are formed may be such positions that these layers sandwich the uneven structural body 20, and may be designed as appropriate.

The first tinted layer 50 and the second tinted layer 60 each include at least one tinted portion that absorbs light of at least a part of the visible light range (wavelength range from 390 to 620 nm). The tinted portion contains at least one type of colorant. The colorant used may be a well-known colorant, exemplified by a pigment, a dye, and a combination thereof. The tinted portion of at least one of the first tinted layer 50 and the second tinted layer 60 on the top side (visually recognized side) is translucent. Since the tinted portion containing a pigment is typically not translucent, the tinted portion of at least the tinted layer on the top side (visually recognized side) preferably does not contain a pigment. The tinted portion of at least the tinted layer on the top side (visually recognized side) preferably contains a dye. The tinted portion of the tinted layer on the back side (opposite side to the visually recognized side) does not require to be translucent, and may contain a pigment.

The number of tinted portions included in the first tinted layer 50 may be designed as appropriate. The entire first tinted layer 50 may be composed of one tinted portion. In a case in which the first tinted layer 50 includes a plurality of tinted portions, the plurality of tinted portions are arranged in a planar manner in any pattern. The planar shape of each tinted portion and a planar array of the plurality of tinted portions may be designed as appropriate. The same applies to the second tinted layer 60.

In the present embodiment, the color exhibited by each tinted portion is any color other than white in the visible light range, or black. The tinted portion of the first tinted layer 50 and the tinted portion of the second tinted layer 60 in the same in-plane position exhibit different colors.

In the example illustrated in the drawing, the first tinted layer 50 includes two tinted portions 51, 52 exhibiting different colors, and the second tinted layer 60 includes two tinted portions 61, 62 exhibiting different colors. The tinted portion 51 of the first tinted layer 50 and the tinted portion 61 of the second tinted layer 60 facing each other are in the same in-plane position and thus exhibit different colors. Similarly, the tinted portion 52 of the first tinted layer 50 and the tinted portion 62 of the second tinted layer 60 facing each other are in the same in-plane position and thus exhibit different colors.

The formation method of the tinted layers 50, 60 is not particularly limited and is exemplified by a common printing method such as the flexographic printing method, the offset lithography method, the gravure printing method, the screen printing method, and the like. For example, a method of printing by a well-known method such as the screen printing method and the ink-jet printing method using a photocurable ink containing a photocurable resin is preferred.

The tinted layers 50, 60 may be tinted printed layers of any color other than white in the visible light range, or black, and are preferably tinted printed layers of any color other than white and black.

Specifically, when a reflection factor of the reflective layer (in the present embodiment, the uneven layer 22, the gas-resin composite layer) is measured by the specular component exclude method (also referred to as the SCE method) for each measurement wavelength from 390 nm to 620 nm at 10 nm intervals, in the same in-plane position, an average value of the reflection factor of the reflective layer measured from the first tinted layer 50 side and an average value of the reflection factor of the reflective layer measured from the second tinted layer 60 side are both preferably 0.5% or greater, more preferably 1.0% or greater, and particularly preferably 3.0% or greater.

In a certain in-plane position, when the reflection factor of the reflective layer measured from the first tinted layer 50 side is 0% or extremely close thereto, the tinted portion of the tinted layer exhibits a black color. In a certain in-plane position, when the average value of the reflection factor of the reflective layer measured from the first tinted layer 50 side is 0.5% or greater, the tinted portion of the tinted layer exhibits a color other than white and black, leading to excellent designability. The same applies to the reflection factor of the reflective layer measured from the second tinted layer 60 side.

The laminate 1 of the present embodiment is suitable for design, and a user or an observer can observe the laminate 1 from the side of any of the first flat layer 21 and the second flat layer 31 that is translucent. Light incident on the laminate 1 is reflected at an interface between the first flat layer 21 and the gas portion (space in the recessed portion 22B), an interface between the protruding portion 22A (preferably the resin portion) and the gas portion, or an interface between the gas portion and the second flat layer 31.

In the present embodiment, since the protruding portion 22A or the recessed portion 22B has a linear shape, preferably a linear shape with a curved portion, and particularly preferably a meandering line shape in a plan view, thus having an anisotropy in a plan view, the uneven layer 22 has a reflection factor anisotropy, that is, a reflection factor thereof is changed depending on the direction.

Light incident on the uneven layer 22 from the side of any of the first flat layer 21 and the second flat layer 31 that is translucent is principally reflected in the width direction of the gas portion in a plan view, and scarcely reflected in the longitudinal direction of the gas portion. In addition, in the case in which a plurality of gas portions are formed at intervals in a plan view, a difference in contrast between the longitudinal direction of the gas portion and the width direction of the gas portion is increased. In the present embodiment, when an angle of the laminate, a visual line or a light source changes, a change in the brightness is different according to the in-plane position, leading to various changes in contrast.

For example, when, on an observation face seen by a user or an observer, the longitudinal direction of the gas portion is the horizontal direction, the width direction of the gas portion is the vertical direction, and the laminate is rotated laterally within a range from -45° to 45° around an axis in the vertical direction passing through the center in the horizontal direction, the contrast changes remarkably, leading to a high designability.

In the present embodiment, the first tinted layer 50 and the second tinted layer 60 are formed to sandwich the uneven structural body 20 in a cross-sectional view, and are designed such that the tinted portion of the first tinted layer 50 and the tinted portion of the second tinted layer 60 in the same in-plane position exhibit different colors. In such a design, when an angle of the laminate, a visual line, or a light source changes, changes in color can be observed in addition to changes in contrast, resulting in more complex changes in appearance, more stereoscopic visualization, and further superior designability.

In the present embodiment, a color combination of each tinted portion of the first tinted layer 50 and each tinted portion of the second tinted layer 60 may be freely designed, whereby the color or a color scheme, and changes in color of the laminate 1 can be freely designed.

In a case in which all constitutive elements of the laminate 1 of the present embodiment are translucent, both of the first tinted layer 50 side and the second tinted layer 60 side may be the top side (visually recognized side). In this case, even in the same in-plane position, the perceived color is different between observation from the first tinted layer 50 side and observation from the second tinted layer 60 side. In this case, the laminate 1 is a reversible laminate allowing a user or an observer to freely select the top side (visually recognized side) according to taste or mood.

The laminate 1 may be suitably used for, for example, decoration of a display apparatus such as a flat or flexible panel display such as a liquid crystal display and an electroluminescent (EL) display, and a touch panel display obtained by combining such a panel display with a touch panel, and the like.

In the case of using the laminate 1 in combination with a display apparatus, it is preferred that the laminate 1 is designed to have a substantially uniform transmittance over an entire face. For example, in a case in which the tinted layer on the top side has a pattern such as a checkered pattern or a wood grain, it is preferred that the color and pattern of the tinted layer on the back side are designed such that transmittance of each pixel of the laminate 1 is substantially uniform over an entire face when overlapping the tinted layer on the top side having the pattern. In such a design, when the display apparatus is unlit, the pattern of the tinted layer on the top side is visually recognized, and when the display apparatus is lit, the transmittance of the laminate 1 is substantially uniform over an entire face and the pattern of the tinted layer on the top side is not visually recognized, thus allowing the display content of the display apparatus to be clearly visually recognized.

In the foregoing application, it is preferred that the reflection factor of the reflective layer (in the present embodiment, the uneven layer 22, the gas-resin composite layer) measured from the first tinted layer 50 side is different from the reflection factor of the reflective layer measured from the second tinted layer 60 side, in the same in-plane position. Specifically, when a reflection factor of the reflective layer is measured by the specular component exclude method (SCE method) for each measurement wavelength from 390 nm to 620 nm at 10 nm intervals, a variance value of a difference between the reflection factor of the reflective layer measured from the first tinted layer 50 side and the reflection factor of the reflective layer measured from the second tinted layer 60 side is preferably 0.3%² or greater, more preferably 0.8%² or greater, and particularly preferably 1.5%² or greater.

The supporting member 11, 41 is not particularly limited, and is exemplified by a resin plate, a resin film, a glass plate, a combination thereof, and the like. The supporting member 11, 41 may have either a single-layer structure or a laminate structure, and may have been subjected to a treatment such as a surface treatment. At least the supporting member on the visually recognized side is translucent.

A constitutive resin of the resin plate or the resin film is not particularly limited, and is exemplified by: an acrylic resin; a vinyl chloride resin; a carbonate resin; an epoxy resin; an olefin resin such as polyethylene and polypropylene; a styrol resin; a styrene resin such as an ABS resin; an amide resin such as nylon; a fluorine resin; a phenol resin; a melamine resin; an ester resin such as polyethylene terephthalate (PET); a combination thereof; and the like.

The glass plate may be a well-known glass plate, and is exemplified by soda lime glass, borosilicate glass, aluminosilicate glass, quartz glass, sapphire glass, alkali-free glass, and the like. The glass plate may have been subjected to well-known surface treatment such as anti-reflective (AR) treatment, anti-glare (AG) layer, anti-fingerprint (AFP) treatment, antifouling treatment, antimicrobial treatment, and the like. The glass plate may also have been subjected to a well-known secondary processing treatment such as a reinforcing process.

In order to prevent reflection at an interface between the supporting member 11 and the first flat layer 21, a difference in refractive index between the supporting member 11 and the first flat layer 21 is preferred to be as small as possible. Similarly, in order to prevent reflection at an interface between the second flat layer 31 and the supporting member 41, a difference in refractive index between the second flat layer 31 and the supporting member 41 is preferred to be as small as possible. The difference in refractive index between the supporting member 11 and the first flat layer 21, and the difference in refractive index between the second flat layer 31 and the supporting member 41 are both preferably 0.3 or less, more preferably 0.2 or less, particularly preferably 0.1 or less, and most preferably 0.05 or less.

In the present embodiment, it is preferred that the uneven structural body 20 is composed of a translucent resin, and the first flat layer 21 included therein is translucent. The visible light transmittance of the uneven structural body 20 is preferably 70% or greater, more preferably 80% or greater, and particularly preferably 90% or greater. In the present specification, the "visible light transmittance" is measured in conformance to JIS R 3106 (1998), unless otherwise specified. Preferably, the laminate 1 may have, on the outer face (face opposite to the uneven face) of the uneven structural body 20, the supporting member 11 made of a translucent resin that supports the first flat layer 21.

The uneven structural body 20 may be produced by a well-known method.

For example, the uneven structural body 20 having a desired uneven pattern may be produced by: preparing a molding die having a reversed pattern of the uneven pattern of the uneven structural body 20; applying a curable composition in a liquid form containing a precursor of the translucent resin such as a monomer, an oligomer, a prepolymer, etc., onto the molding die; curing the curable composition through heating or irradiation with an active energy ray such as a ultraviolet ray and an electron beam; and separating the uneven structural body 20 thus molded from the molding die. It may be contemplated that the supporting member 11 such as a resin film is stacked on the curable composition applied on the molding die, the curable composition is cured, and then the uneven structural body 20 thus molded is separated from the molding die along with the supporting member 11.

Alternatively, the uneven structural body 20 having a desired uneven pattern may be produced by: preparing a flat translucent resin film in advance; pressing a molding die having a reversed pattern of the uneven pattern of the uneven structural body 20 against the translucent resin film; and heating the translucent resin film. The translucent resin film may also be heated before pressing the die thereagainst. The supporting member 11 may be either overlaid on a flat translucent resin film in advance, or overlaid on the uneven structural body 20 obtained.

The second flat layer 31 is preferably a translucent resin layer, for example a layer including a pressure sensitive adhesive layer. The laminate 1 may have, on the outer face (face opposite to the uneven layer 22) of the second flat layer 31, the supporting member 41 made of a translucent resin that supports the second flat layer 31.

For example, it may be contemplated that a well-known pressure sensitive adhesive sheet having peelable protective films overlaid on both faces of a pressure sensitive adhesive layer is prepared, one protective film is peeled off from the pressure sensitive adhesive sheet to expose the pressure sensitive adhesive layer, and then the exposed pressure sensitive adhesive layer side of the pressure sensitive adhesive sheet is bonded onto the uneven face of the uneven structural body 20. In this method, the protective film left on the pressure sensitive adhesive sheet serves as the supporting member 41.

After carrying out the bonding, the other protective film left on the pressure sensitive adhesive sheet may be peeled off, and another resin film or a glass plate as the supporting member 41 may be bonded onto the exposed pressure sensitive adhesive layer.

The pressure sensitive adhesive sheet is not particularly limited, and a well-known pressure sensitive adhesive sheet employing an adhesive such as an acrylic adhesive, a urethane adhesive, a silicone adhesive, and the like, may be used.

After being overlaid in a liquid form or in a semi-cured state on the uneven face of the uneven structural body 20, the pressure sensitive adhesive layer may be cured through heating or irradiation with an active energy ray such as an ultraviolet ray and an electron beam.

Note that, in the case in which the second flat layer 31 is a pressure sensitive adhesive layer, the supporting member 41 can be attached and detached, or replaced.

As the second flat layer 31 and the supporting member 41, a pressure sensitive adhesive tape may be employed in which a pressure sensitive adhesive layer is overlaid on one face of a resin substrate made of resin such as polyethylene terephthalate (PET) and the like. In this case, the pressure sensitive adhesive layer serves as the second flat layer 31, and the resin substrate serves as the supporting member 41.

In the case in which the second flat layer 31 includes a pressure sensitive adhesive layer, the pressure sensitive adhesive layer is preferably thinner than the uneven layer 22. Due to the pressure sensitive adhesive layer included in the second flat layer 31 being thinner than the uneven layer 22, squeezing and reduction in size of the gas portion (space inside the recessed portion 22B) as a result of bonding of the first flat layer 21 and the second flat layer 31 are suppressed even under an external force applied, whereby reduction of a reflection intensity is suppressed. A ratio of the thickness of the pressure sensitive adhesive layer included in the second flat layer 31 to the thickness of the uneven layer 22 (the pressure sensitive adhesive layer included in the second flat layer 31/the uneven layer 22) is preferably less than 1.0, more preferably 0.7 or less, and particularly preferably 0.5 or less. The lower limit of the thickness ratio is not particularly limited, and is preferably 0.1 or greater.

The thickness of the second flat layer 31 is not particularly limited, and preferably 100 µm or less, more preferably 30 µm or less, particularly preferably 10 µm or less, and most preferably 5 µm or less. The lower limit of the thickness is not particularly limited, and is preferably 1 µm or greater.

The protruding portion 22A does not require to be integrally molded with the first flat layer 21 or the second flat layer 31. A method for forming at least one protruding portion 22A on the first flat layer 21 and/or the second flat layer 31 prepared in advance, without employing integral molding, is not particularly limited and is exemplified by a typical printing method such as the flexographic printing method, the offset lithography method, the gravure printing method, and the screen printing method, and the like. For the printing, a photocurable ink (e.g., ultraviolet (UV) curable ink) containing a photocurable resin may be used. For example, at least one protruding portion 22A (resin portion) can be printed on a translucent resin film, serving as the resin layer, by using a UV printer "UJF-6042MkII" manufactured by MIMAKI ENGINEERING CO., LTD. This method enables formation of at least one protruding portion 22A by a simple process using a printing ink, which is an inexpensive material.

In the laminate 1 of the present embodiment, although the reflective layer is not provided along the uneven face, since only gas is present in the recessed portion of the uneven structural body 20, a great difference in refractive index can be ensured between the gas and a material in contact therewith (the first flat layer or the second flat layer), whereby the reflection intensity can be increased as in the case of providing the reflective layer along the uneven face. Note that although the laminate 1 does not require the reflective layer to be provided along the uneven face, the reflective layer may be provided along the uneven face as needed.

The laminate 1 may have a decorating layer having a pattern such as a wood grain, independently from the first tinted layer 50 and the second tinted layer 60. For example, by printing a wood grain pattern as the decorating layer, the laminate imitating wood can be provided inexpensively without using wood, which is an expensive natural material.

### (Second Embodiment of Laminate Structure)

Fig. 2 is a schematic cross-sectional view of a laminate according to the second embodiment of the present invention. The constitutive elements which are the same as those of the first embodiment are denoted by the same reference signs and description thereof is omitted.

The laminate 2 of the present embodiment is obtained by overlaying a glass plate 72 on at least one surface of the laminate 1 of the first embodiment via an interlayer film 71.

The example illustrated in the drawing is an example of overlaying the glass plate 72 on both faces of the laminate 1 of the first embodiment via the interlayer film 71. The glass plate 72 is the supporting member. The interlayer film 71 is a well-known interlayer film used for laminated glass.

### (Third Embodiment of Laminate Structure)

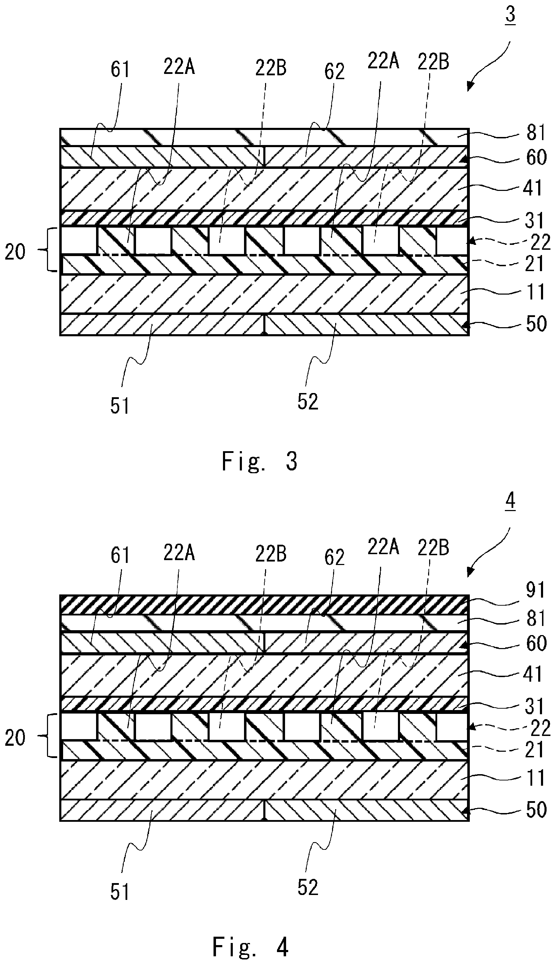

Fig. 3 is a schematic cross-sectional view of a laminate according to the third embodiment of the present invention. The constitutive elements which are the same as those of the first and second embodiments are denoted by the same reference signs and description thereof is omitted.

The laminate 3 of the present embodiment is obtained by overlaying a scattering layer 81 on one surface of the laminate 1 of the first embodiment.

In the example illustrated in the drawing, the first tinted layer 50 is the tinted layer on the top side, and the second tinted layer 60 is the tinted layer on the back side. The scattering layer 81 is arranged behind the tinted layer on the back side (in the example illustrated in the drawing, the second tinted layer 60).

The scattering layer 81 is exemplified by a white layer containing a white pigment, which may be formed by, for example, printing using an ink containing the white pigment.

By forming the scattering layer such as the white layer behind the tinted layer on the back side, the color observed from the first tinted layer 50 side becomes brighter than in the laminate 1 of the first embodiment.

In the configuration in which the tinted layer 50 on the top side and the tinted layer 60 on the back side are provided to sandwich the uneven structural body 20, and the scattering layer 81 is arranged behind the tinted layer 60 on the back side, light having passed through both the tinted layer 50 on the top side and the tinted layer 60 on the back side is scattered at the surface of the scattering layer 81.

In the laminate 3 of the present embodiment, light of a certain wavelength range of light having passed through the tinted layer 50 on the top side is reflected at the surface of the uneven structural body 20, while light of a wavelength range having passed through both the tinted layer 50 on the top side and the tinted layer 60 on the back side is scattered at the surface of the scattering layer 81. In the laminate 3 of the present embodiment, while a bright color is exhibited through scattering as a result of different wavelength ranges of the reflected light and the scattered light, when an angle of the laminate, a visual line, or a light source changes, changes in color can be observed in addition to changes in contrast, resulting in more complex changes in appearance, more stereoscopic visualization, and further superior designability.

### <Design Modification of Third Embodiment>

As described in the second embodiment, the glass plate 72 may be overlaid on at least one surface of the laminate 3 of the third embodiment via the interlayer film 71 (not illustrated in the drawing).

### <Another Design Modification of Third Embodiment>

Instead of providing the scattering layer behind the tinted layer on the back side (opposite side to the visually recognized side), a component having light scattering characteristics may be included in the tinted layer on the back side, and the tinted layer on the back side may be employed as the scattering layer. For example, in a case in which the tinted layer on the back side contains a pigment, the tinted layer can serve as the scattering layer.

In the configuration in which the tinted layer on the top side and the tinted layer on the back side are provided to sandwich the uneven structural body, and the tinted layer on the back side serves as the scattering layer, light having passed through the tinted layer on the top side and incident on the tinted layer on the back side is scattered in the tinted layer on the back side serving as the scattering layer. This design modification produces the similar effects to those of the laminate 3 of the third embodiment.

More specifically, light of a certain wavelength range in light having passed through the tinted layer 50 on the top side is reflected at the surface of the uneven structural body 20, and light of a wavelength range having passed through the tinted layer 50 on the top side and incident on the tinted layer 60 on the back side is scattered in the tinted layer 60 on the back side while being absorbed by the tinted layer 60 on the back side. While a bright color is exhibited through scattering as a result of different wavelength ranges of the reflected light and the scattered light, when an angle of the laminate, a visual line, or a light source changes, changes in color can be observed in addition to changes in contrast, resulting in more complex changes in appearance, more stereoscopic visualization, and further superior designability.

### (Fourth Embodiment of Laminate Structure)

Fig. 4 is a schematic cross-sectional view of a laminate according to the fourth embodiment of the present invention. The constitutive elements which are the same as those of the first to third embodiments are denoted by the same reference signs and description thereof is omitted.

The laminate 4 of the present embodiment is obtained by overlaying a backing print layer 91 on the scattering layer 81 of the laminate 3 of the third embodiment.

In the example illustrated in the drawing, the first tinted layer 50 is the tinted layer on the top side, and the second tinted layer 60 is the tinted layer on the back side. The scattering layer 81 is arranged behind the tinted layer on the back side (in the example illustrated in the drawing, the second tinted layer 60), and the backing print layer 91 is arranged further behind the scattering layer 81.

The backing print layer 91 is exemplified by a black layer containing a black pigment, which may be formed by, for example, printing using an ink containing the black pigment.

The present embodiment provides the laminate 4 producing the same effects as the laminate 3 of the third embodiment and further having light shielding properties, due to further forming the backing print layer 91 behind the scattering layer 81.

### <Design Modification of Fourth Embodiment>

In a case in which the second tinted layer 60 contains a pigment, it is not required to provide the scattering layer 81.

### <Another Design Modification of Fourth Embodiment>

As described in the second embodiment, the glass plate 72 may be overlaid on at least one surface of the laminate 4 of the present embodiment via the interlayer film 71 (not illustrated in the drawing).

### (Fifth Embodiment of Laminate Structure)

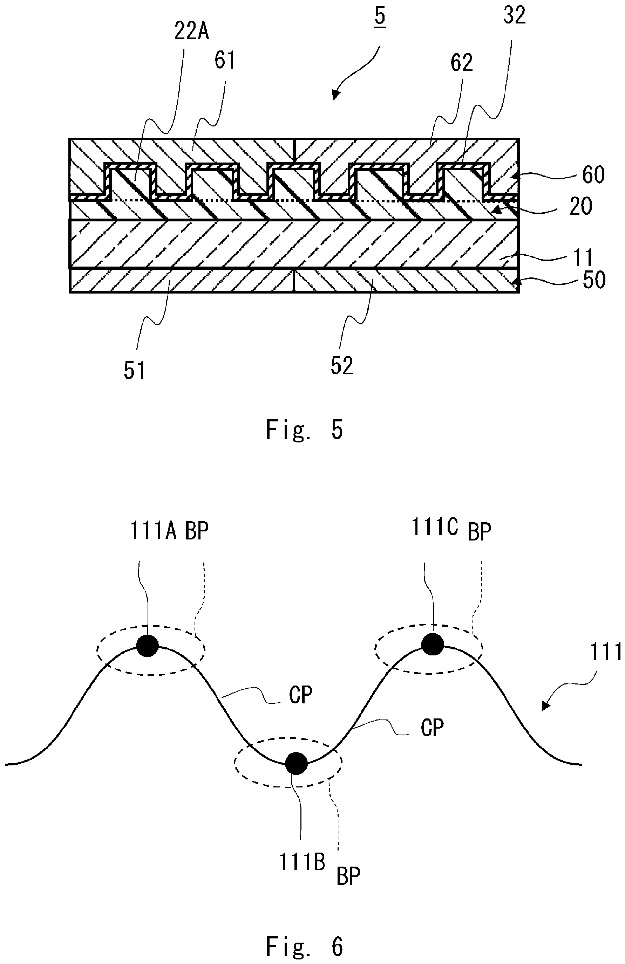

Fig. 5 is a schematic cross-sectional view of a laminate according to the fifth embodiment of the present invention. The constitutive elements which are the same as those of the first to fourth embodiments are denoted by the same reference signs and description thereof is omitted.

The laminate 5 of the present embodiment is obtained by forming a translucent reflective layer 32 having an uneven surface along the uneven face of the uneven layer 22 of the uneven structural body 20 formed on the supporting member 11. By providing the reflective layer along the uneven face of the uneven layer 22, the intensity of the reflected light is increased, whereby designability can be improved.

The reflective layer is preferably a high refractive index reflective layer containing a high refractive index material with a difference in refractive index from the uneven layer 22 being 0.4 or greater. It is preferred that the high refractive index reflective layer contains at least one high refractive index material selected from the group consisting of TiO₂, Nb₂O₅, ZnO, ZnS, and ZrO₂.

The reflective layer may be a metallic reflective layer containing a metal. By adjusting a thickness to be relatively small, the metallic reflective layer can reflect a part of light and transmit another part of light. It is preferred that the metallic reflective layer contains at least one metal material selected from the group consisting of Al, Ag, Sn, In, and Cr.

As shown in the drawing, it is preferred that one of the first tinted layer 50 and the second tinted layer 60 is formed in contact with the uneven surface of the reflective layer 32. It is preferred that this tinted layer is formed to fill the recessed portions of the uneven surface of the reflective layer 32 and to cover the entire surface of the reflective layer 32. Uneven of the surface of this tinted layer on the opposite side to the reflective layer is preferably smaller than the uneven surface of the reflective layer 32, and more preferably substantially nonexistent. In the example illustrated in the drawing, the second tinted layer 60 satisfies such a condition.

In the foregoing configuration, the tinted layer (in the example illustrated in the drawing, the second tinted layer 60) formed in contact with the uneven surface of the reflective layer 32 has a thickness distribution. In this case, the thickness of the one tinted layer (in the example illustrated in the drawing, the second tinted layer 60) is changed depending on the in-plane position, and the thickness of the one tinted layer (in the example illustrated in the drawing, the second tinted layer 60) is changed depending on an angle of a visual line, resulting in greater changes in color, more stereoscopic visualization, and further superior designability when an angle of the laminate, a visual line, or a light source changes.

In a case in which the laminate 5 is visually recognized by a user or an observer from one side, it is preferred that one of the first tinted layer 50 and the second tinted layer 60 on the visually recognized side is formed along the uneven surface of the reflective layer 32 in order to produce the foregoing effects more effectively. In the laminate 5, it is preferred that the second tinted layer 60 side is the visually recognized side.

Design modifications may be made as appropriate to the laminates 1 to 5 of the first to fifth embodiments, without departing from the principles of the present invention.

Each constitutive element of the laminates 1 to 5 may include any additive as needed.

The topmost layer on the visually recognized side of the laminates 1 to 5 may include an ultraviolet ray (UV) absorbent as needed. The UV absorbent enables prevention of deterioration of the uneven structural body 20 and the like caused by ultraviolet ray.

The laminates 1 to 5 may include any constitutive element other than the above-mentioned additives as needed.

### [Planar Pattern of Uneven structural body]

Hereinafter, a planar pattern of the uneven structural body included in the laminate of the present invention is described. The constitutive elements which are the same as those of Fig. 1 to Fig. 5 are denoted by the same reference signs and description thereof is omitted.

As described above, the laminate of the present invention may include, on the surface, a translucent uneven structural body that includes an uneven layer with a plurality of protruding or recessed portions that are linear in a plan view. The protruding portion or the recessed portion may be straight, curved, or a combination of at least one curved portion and at least one straight part in a plan view. Each protruding portion or each recessed portion has preferably at least one curved portion in a plan view, more preferably a plurality of curved portions, and particularly preferably a meandering line shape.

In the uneven layer, in a plan view, the plurality of protruding portions or recessed portions are formed side-by-side at a pitch of no greater than 1,000 µm in the order from first to n-th.

Note that n is an integer of 3 or greater, preferably 10 or greater, more preferably 100 or greater, and particularly preferably 1,000 or greater. The upper limit of n is not particularly limited, and is preferably 10,000,000 or less, and more preferably 1,000,000 or less. The pitch is preferably as small as possible, and preferably 100 µm or less, and more preferably 50 µm or less.

### (First Embodiment of Planar Pattern)

In the first embodiment of the planar pattern, the protruding portion or the recessed portion may include at least one curved portion.

Fig. 6 is a drawing showing an example of the planar pattern of one protruding or recessed portion 111 in the planar pattern according to the first embodiment. In Fig. 6, the reference sign BP denotes the curved portion, the reference signs 111A to 111C denote poles of the curved portion, and the reference sign CP denotes a connection portion connected to the curved portion. The connection portion CP connected to the curved portion BP may be either curved or straight.

In one aspect, the uneven layer may have, in a plan view, a pattern in which a plurality of linear protruding portions 111 shown in Fig. 6, each including a first curved line part extending in a first direction and a second curved line part extending in a second direction connected by the curved portion BP, are formed at intervals.

In another aspect, the uneven layer may have, in a plan view, a pattern in which a plurality of linear protruding portions 111 each including a first straight line part extending in a first direction and a second straight line part extending in a second direction smoothly connected by the curved portion BP, are formed at intervals.

As described above, the linear protruding or recessed portion 111 may include first and second connection portions CP consisting of a curved line part or a straight line part, connected to one curved portion BP and extending in different directions. It is not required that the linear protruding or recessed portion 111 includes the connection portion CP.

In the case in which the protruding portion or the recessed portion has at least one curved portion, a bending angle of the curved portion is preferably from 30 to 150°.

In the present specification, the bending angle is defined as follows.

In a case in which the first or second connection portion CP is a curved line part, a tangent line at an inflection point between the first or second curved portion BP and the connection portion CP is obtained. In a case in which the first or second connection portion CP is a straight line part, an extension of the first or second straight line part is obtained. In a case in which the connection portion CP is not connected to the curved portion BP, a tangent line at an end point of the curved portion BP is obtained. An angle formed by the tangent line or the extension on one side of the curved portion and the tangent line or the extension on the other side of the curved portion is defined to be the bending angle.

Light incident on the uneven structural body is principally reflected in the line width direction of the linear protruding or recessed portion 111 in a plan view, and scarcely reflected in the direction perpendicular to the line width direction. The contrast between the line width direction of the linear protruding or recessed portion 111 and the direction perpendicular to the line width direction becomes greater.

In a case in which the linear protruding or recessed portion 111 has the curved portion BP, preferably the curved portion BP having the bending angle from 30 to 150°, the extending direction of the protruding or recessed portion 111 is significantly changed across the curved portion, whereby a significant contrast is generated across the curved portion BP. The contrast tends to be greater when the bending angle is closer to 90°.

For example, in a case in which a plurality of protruding or recessed portions 111 each having the curved portion BP are arranged such that the curved portions BP of adjacent protruding or recessed portions 111 are adjacent or proximal to each other, a portion where the plurality of curved portions BP are lined up is visualized stereoscopically, as if the portion bulges forward or in depth, due to the contrast. A positional relationship between the light source, the laminate, and an observer determines whether the portion is perceived to bulge forward or in depth.

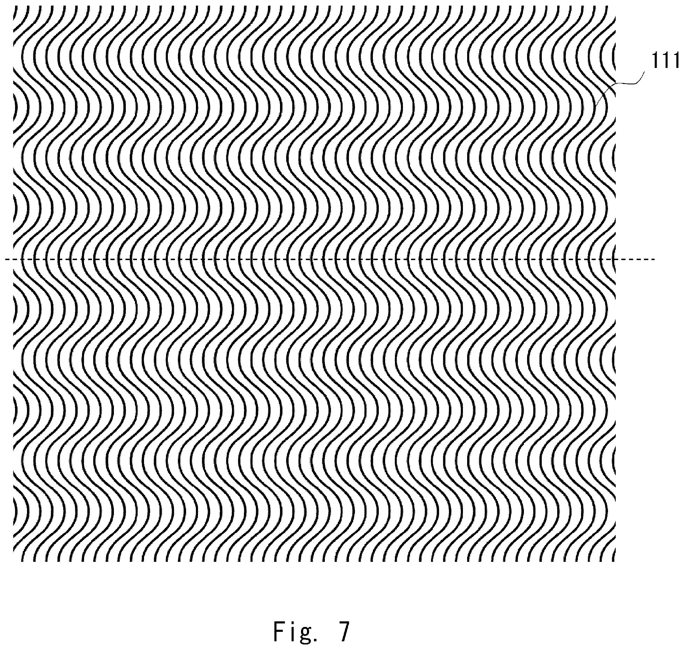

Fig. 7 shows an example of patterns of a plurality of protruding or recessed portions in meandering line shapes in a plan view, arranged such that curved portions of adjacent protruding or recessed portions are adjacent. In Fig. 7, the protruding or recessed portions 111 are shown by black solid lines. As shown in the drawing, the portion where the plurality of curved portions are lined up is visualized stereoscopically, as if the portion bulges forward or in depth.

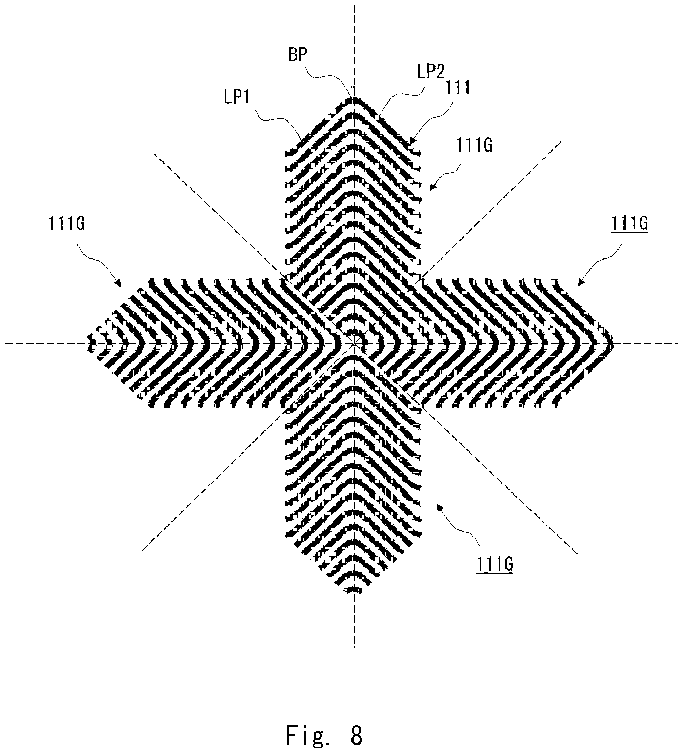

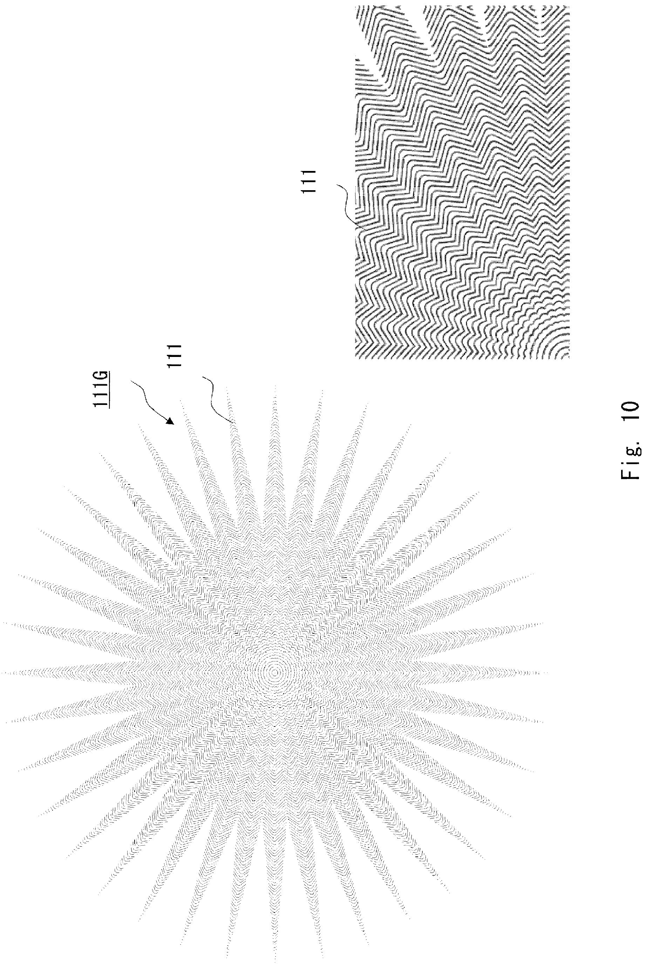

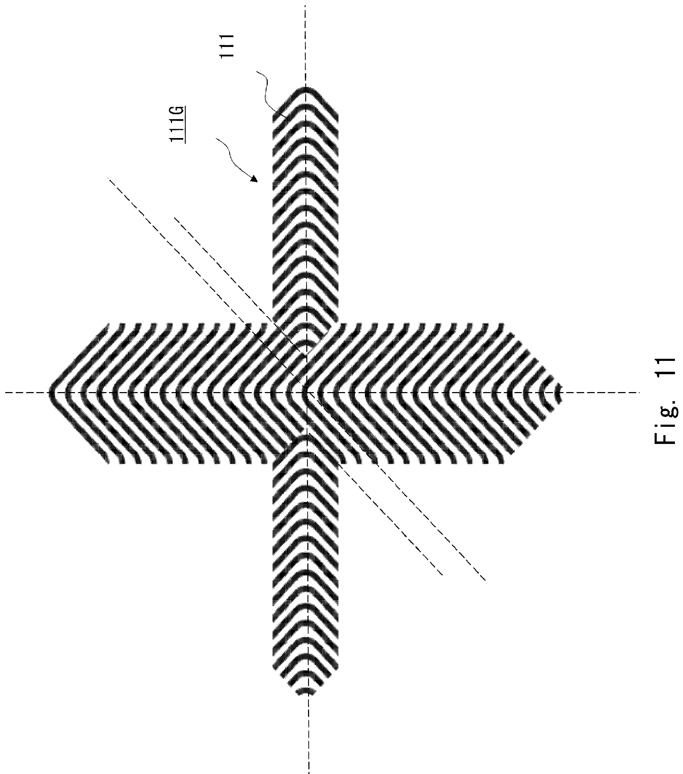

Through application of the foregoing design, a laminate that exhibits an appearance like faceted glass can be provided without drilling the laminate. Fig. 8 to Fig. 11 show examples of a pattern of the plurality of protruding or recessed portions that looks like faceted glass. In Fig. 10, the drawing on the left side is an overall view of the pattern, while the drawing on the right lower side is a partial enlarged view of a central point of the pattern and the vicinity thereof. In Fig. 8 to Fig. 11, the protruding or recessed portions 111 are shown by black solid lines. The laminate may have one, two or more of the patterns shown in Fig. 8 to Fig. 11.

The pattern of the plurality of protruding or recessed portions 111 in the aspects shown in Fig. 8 to Fig. 11, in a plan view, includes a protruding portion group or a recessed portion group 111G in which the plurality of linear protruding or recessed portions 111 each including a first straight line part LP1 extending in a first direction and a second straight line part LP2 extending in a second direction smoothly connected by the curved portion BP are arrayed in the same direction at a regular pitch. The pattern may include a plurality of protruding or recessed portion groups 111G extending from a central part in a plurality of radial directions, preferably without overlapping each other.

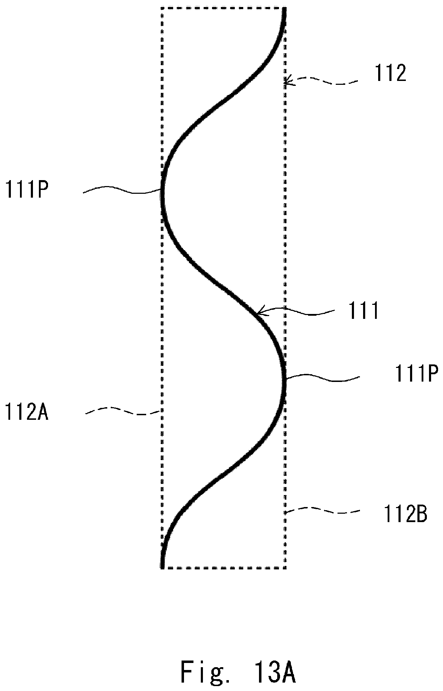

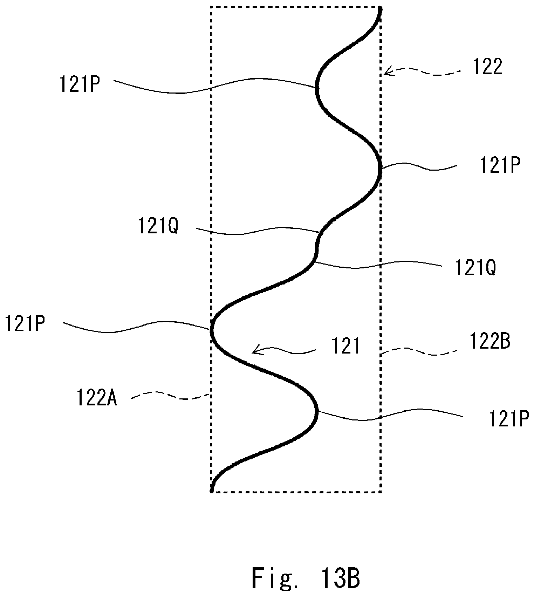

The array pattern of the plurality of protruding or recessed portions 111 shown in Fig. 8 to Fig. 11 are similar to an array pattern of a plurality of protruding portions (21) shown in Fig. 13 to Fig. 16 of Japanese Patent Application No. 2018-141344 (not published at the time of filing of the present application), which is a prior application of the inventor of the present invention. Refer to this Patent Literature for details of the pattern.

The radial pattern consisting of the plurality of protruding or recessed portion groups 111G extending from the central part in the plurality of radial directions without overlapping each other as shown in Fig. 8 to Fig. 11 may further have a contour pattern formed with similar plurality of protruding or recessed portion groups 111G to connect each apex of the radial pattern.

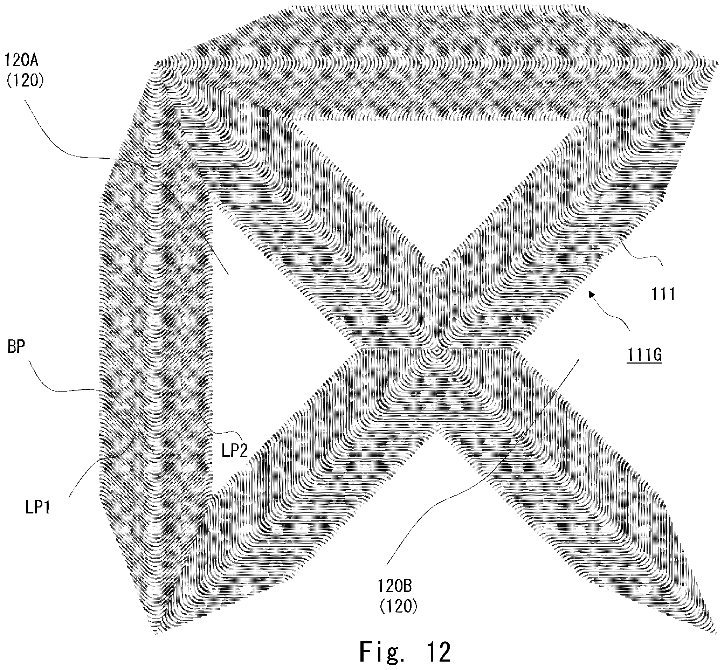

As an example, Fig. 12 shows a manner in which two adjacent apexes of the radial pattern consisting of four protruding or recessed portion groups 111G extending from the central part in four directions at 90° intervals shown in Fig. 8 are connected by one protruding portion group or recessed portion group 111G. By connecting the plurality of apexes of the radial pattern by the plurality of protruding or recessed portion groups 111G, the contour pattern connecting each apex of the radial pattern can be formed.

As with the laminate 1 of the first embodiment shown in Fig. 1, in a case in which the uneven layer is a gas-resin composite layer including the plurality of gas portions formed in the plurality of recessed portions 22B and a plurality of resin portions (the plurality of protruding portions 22A) separating the plurality of gas portions from each other, a non-formed region of the pattern of the plurality of protruding or recessed portion groups 111G including the foregoing radial pattern and the contour pattern inside the uneven layer may be a resin-only region 120 consisting only of the resin portion.

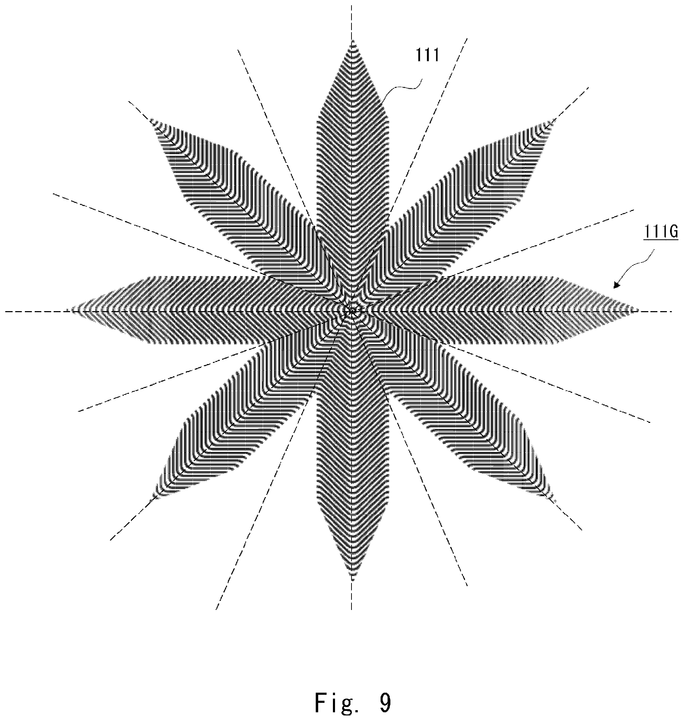

Such a pattern design may be applied to any radial pattern including the exemplary radial patterns shown in Fig. 9 to Fig. 11. The radial pattern and the contour pattern may be freely combined. Note that, as shown in Fig. 12, the contour pattern may be formed only in a part of the entire contour of the radial pattern.

As described above, the non-formed region of the pattern of the plurality of protruding or recessed portion groups 111G may be the resin-only region 120 consisting only of the resin portion. This region does not have a specific reflection, has a similar appearance to the supporting member 11, and is perceived not to have drilling of faceted glass.

By providing a region having the plurality of protruding or recessed portion groups 111G and the resin-only region 120 consisting only of the resin portion inside the uneven layer, a region perceived to have drilling of faceted glass and a region perceived not to have drilling of faceted glass can be arbitrarily designed. Note that the resin-only region 120 have two types: a closed region 120A surrounded by the plurality of protruding or recessed portion groups 111G; and an open region 120B not surrounded by the plurality of protruding or recessed portion groups 111G and partially open.

### (Second Embodiment of Planar Pattern)

In the examples of the pattern shown in Fig. 7 to Fig. 12, the direction in which the curved portions are lined up in one protruding or recessed portion group 111G is a straight direction. The direction in which the curved portions are lined up does not required to be a straight direction.

Fig. 13A and Fig. 13B are examples of a schematic plan view of one protruding or recessed portion in a meandering line shape in a plan view. In the drawing, thick lines 111, 121 each indicate one protruding or recessed portion. The protruding or recessed portions in the example illustrated in the drawing each have both line ends. In the drawing, the reference signs 112, 122 each denote a virtual rectangle of the minimum area circumscribed around the entire protruding or recessed portion 111, 121.

The planar shape of the protruding or recessed portion may be a circular meandering line shape without line ends in a plan view.

For each protruding or recessed portion, a virtual rectangle of the minimum area circumscribed around the entire protruding or recessed portion is drawn, and a plurality of poles of which tangent lines are parallel to linear directions of two opposite edges of the virtual rectangle are each defined as a specific pole. However, when there are line ends, the line ends are not included in the specific poles.

The protruding or recessed portion 111 shown in Fig. 13A has two poles, which are both specific poles 111P of which tangent lines are parallel to the linear directions of the two opposite edges 112A, 112B of the virtual rectangle 112. In the example shown in Fig. 13A, the two specific poles 111P are present respectively on the two opposite edges 112A, 112B of the virtual rectangle 112.

The protruding or recessed portion 121 shown in Fig. 13B has six poles, four of which are specific poles 121P of which tangent lines are parallel to the linear directions of the two opposite edges 122A, 122B of the virtual rectangle 122. In the drawing, a point 121Q is a pole that does not fall into the definition of the specific pole. In the example shown in Fig. 13B, two of the four specific poles 121P are present on the two opposite edges 122A, 122B of the virtual rectangle 122, and the other two are present within the virtual rectangle 122.

In the second embodiment of the planar pattern, the following design is possible.

An integer x is defined to satisfy 1 ≤ x ≤ n-1.

In the uneven layer of the uneven structural body, in a plan view,
when an operation of connecting one specific pole of the x-th protruding or recessed portion and one specific pole, which is the closest to the specific pole, of the x+1-th protruding or recessed portion by the x-th virtual straight line is started from any one specific pole of the first protruding or recessed portion as a starting point and repeated until one specific pole of the n-th protruding or recessed portion is reached,
the linear direction of the x-th virtual straight line is different from the linear direction of the x+1-th virtual straight line.

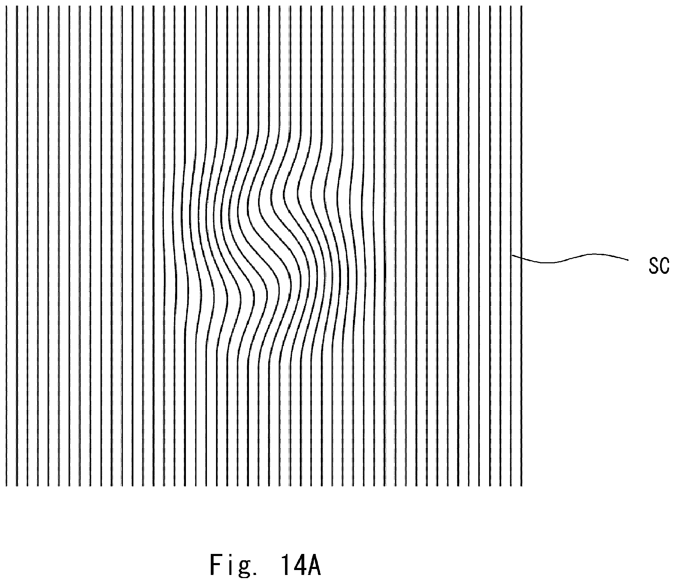

Fig. 14A, Fig. 15A, Fig. 16, and Fig. 17 are schematic plan views showing examples of a planar pattern of the plurality of protruding or recessed portions SC. In these drawings, a plurality of protruding or recessed portions SC in straight-line or meandering line shapes in the up-down direction in the drawing are formed side-by-side in the left-right direction in the drawing at a pitch of 1,000 µm or less, preferably 100 µm or less, and more preferably 50 µm or less.

In Fig. 14A, Fig. 15A, Fig. 16, and Fig. 17, the line width and the pitch of the protruding or recessed portions SC are illustrated larger than life.

In the pattern shown in Fig. 14A, the protruding or recessed portions SC in straight-line shapes and the protruding or recessed portions SC in meandering line shapes coexist, and the first to the n-th protruding or recessed portions SC in meandering line shapes in a plan view are identified in the array direction from the plurality of protruding or recessed portions SC. In other words, the first to n-th protruding or recessed portions SC do not include the protruding or recessed portions SC in straight-line shapes.

As examples, in the planar patterns shown in Fig. 14A, Fig. 15A, Fig. 16, and Fig. 17, the leftmost protruding or recessed portion in a meandering line shape in a plan view in the drawing is defined as "the first protruding or recessed portion" and the rightmost protruding or recessed portion in a meandering line shape in a plan view in the drawing is defined as the n-th protruding or recessed portion.

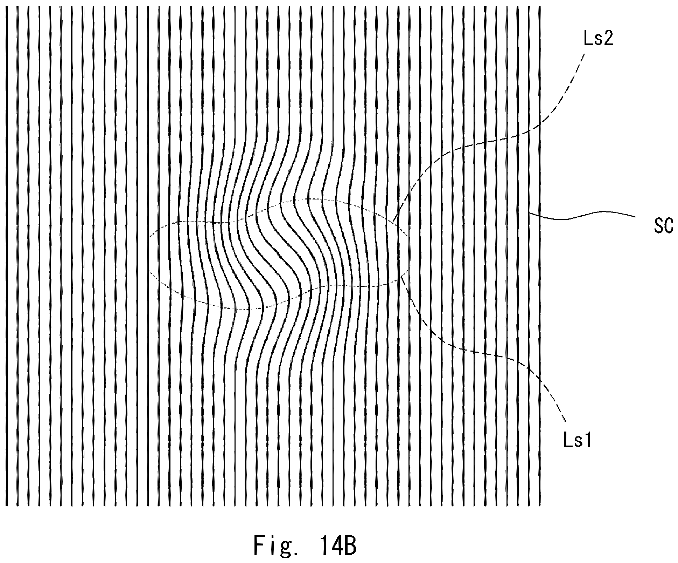

Fig. 14B exemplarily shows virtual straight line groups obtained by, with respect to the plurality of protruding or recessed portions SC shown in Fig. 14A, an operation of connecting one specific pole of the x-th (note that 1 ≤ x ≤ n-1) protruding or recessed portion SC and one specific pole, which is the closest to the specific pole, of the x+1-th protruding or recessed portion SC by the x-th virtual straight line, the operation being started from any one specific pole of the first protruding or recessed portion SC as a starting point and repeated until one specific pole of the n-th protruding or recessed portion SC is reached. Fig. 14B exemplarily shows two virtual straight line groups Ls1, Ls2.

In Fig. 14B, the virtual straight line group Ls1 is not a straight line, and the linear direction (linear angle) of each of the plurality of virtual straight lines included in the virtual straight line group Ls1 varies. In the virtual straight line group Ls1, the linear direction of the x-th virtual straight line is different from the linear direction (linear angle) of the x+1-th virtual straight line. The same applies to the virtual straight line group Ls2.

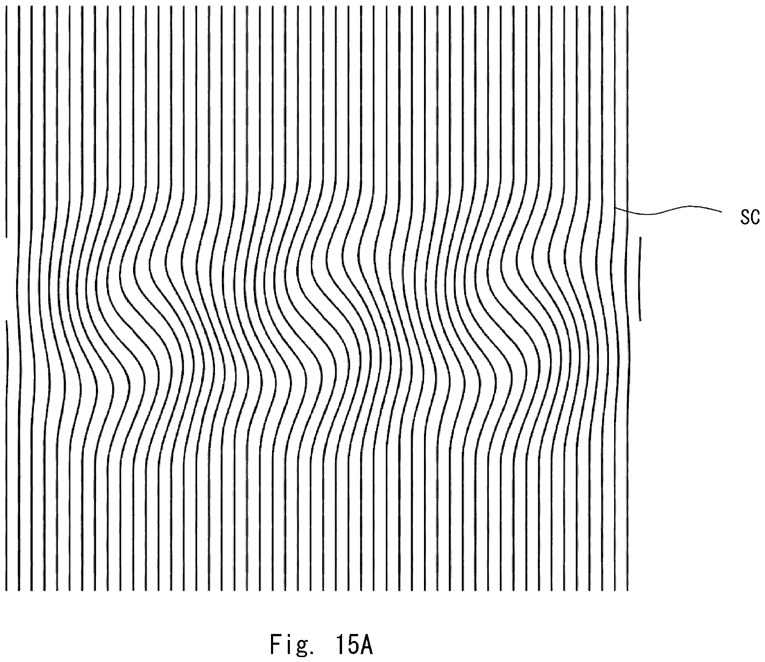

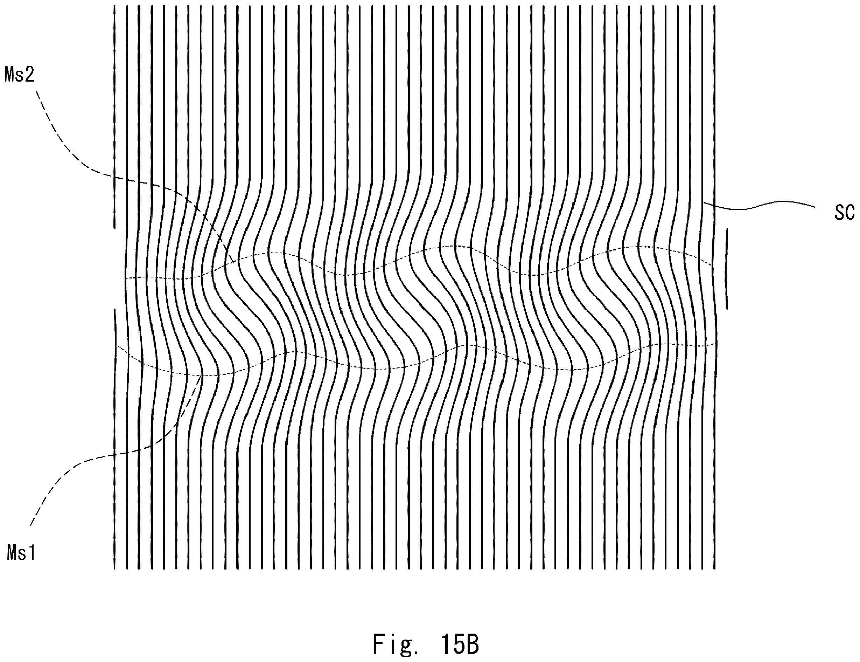

Fig. 15B exemplarily shows virtual straight line groups obtained by, with respect to the plurality of protruding or recessed portions SC shown in Fig. 15A, an operation of connecting one specific pole of the x-th (note that 1 ≤ x ≤ n-1) protruding or recessed portion SC and one specific pole, which is the closest to the specific pole, of the x+1-th protruding or recessed portion SC by the x-th virtual straight line, the operation being started from any one specific pole of the first protruding or recessed portion SC as a starting point and repeated until one specific pole of the n-th protruding or recessed portion SC is reached. Fig. 15B exemplarily shows two virtual straight line groups Ms1, Ms2.

In Fig. 15B, the virtual straight line group Ms1 is not a straight line, and the linear direction (linear angle) of each of the plurality of virtual straight lines included in the virtual straight line group Ms1 varies. The linear direction of the x-th virtual straight line is different from the linear direction (linear angle) of the x+1-th virtual straight line. The same applies to the virtual straight line group Ms2.

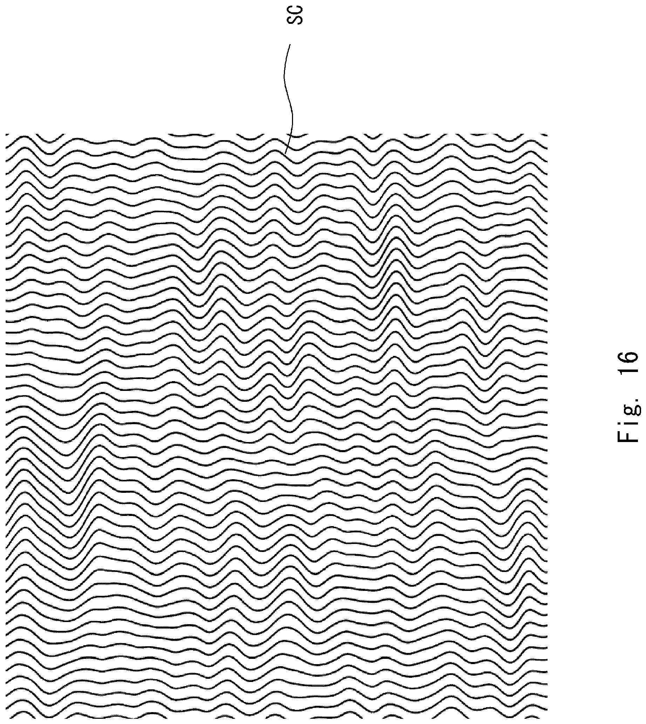

Also with the pattern shown in Fig. 16, as with the patterns shown in Fig. 14A and Fig. 15A, when an operation of connecting one specific pole of the x-th (note that 1 ≤ x ≤ n-1) protruding or recessed portion SC and one specific pole, which is the closest to the specific pole, of the x+1-th protruding or recessed portion SC by the x-th virtual straight line is started from any one specific pole of the first protruding or recessed portion SC as a starting point and repeated until one specific pole of the n-th protruding or recessed portion SC is reached, the linear direction of the x-th virtual straight line is different from the linear direction (linear angle) of the x+1-th virtual straight line.

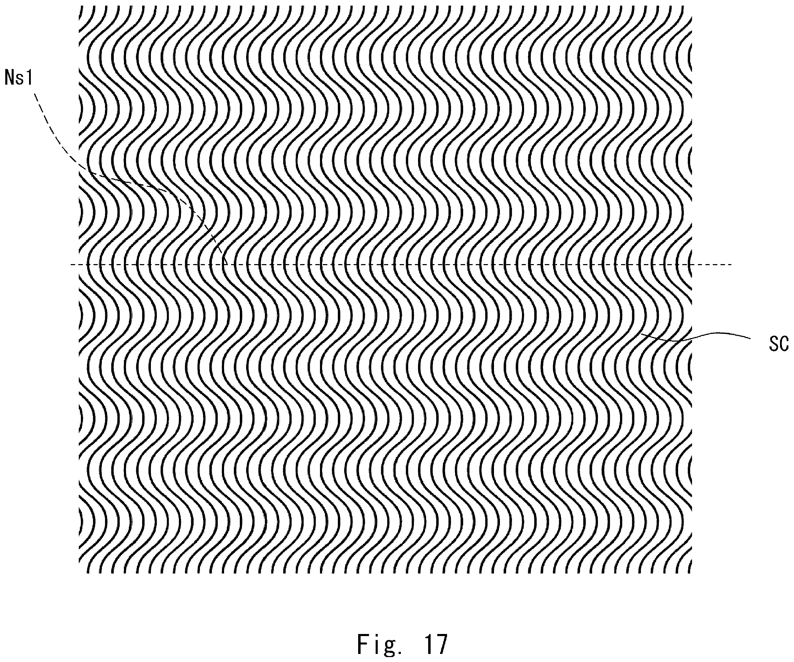

With the pattern shown in Fig. 17, when an operation of connecting one specific pole of the x-th (note that 1 ≤ x ≤ n-1) protruding or recessed portion SC and one specific pole, which is the closest to the specific pole, of the x+1-th protruding or recessed portion SC by the x-th virtual straight line is started from any one specific pole of the first protruding or recessed portion SC as a starting point and repeated until one specific pole of the n-th protruding or recessed portion SC is reached, the linear direction of the x-th virtual straight line and the linear direction (linear angle) of the x+1-th virtual straight line are constant. Fig. 17 exemplarily shows one virtual straight line group Ns1. The virtual straight line group Ns1 is a straight line, and the linear direction (linear angle) of each virtual straight line does not vary.

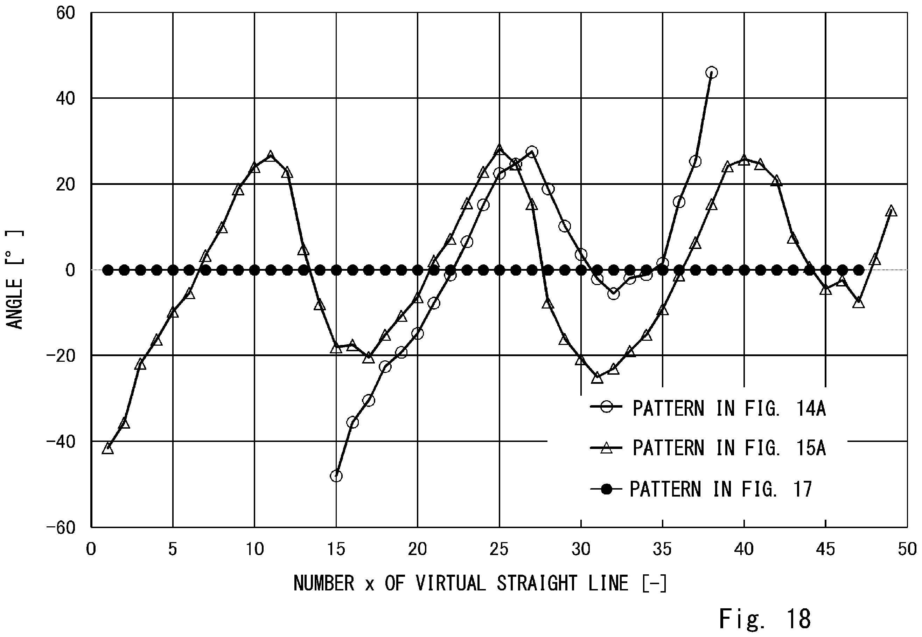

Fig. 18 is a graph showing an example of relationship between the number x of the virtual straight line and an angle of the virtual straight line in any virtual straight line group, in each of the patterns shown in Fig. 14A, Fig. 15A, and Fig. 17. For example, for the pattern shown in Fig. 14A, a relationship between the number x of the virtual straight line and an angle of the virtual straight line was obtained for the virtual straight line group Ls1 shown in Fig. 14B, and shown in the graph.

Note that the angle (°) of each virtual straight line was obtained in a range from -90 to 90°, with a reference line of the angle 0° being a direction passing through the starting point and perpendicular to an edge of a vertical rectangle to which the starting point belongs.

As shown in Fig. 18, in the patterns shown in Fig. 14A and Fig. 15A, when the number x of the virtual straight line was different, the angle of the virtual straight line was different. With the patterns shown in Fig. 14A and Fig. 15A, the graph included at least one angle increase portion where the angle increased as x increased, and at least one angle decrease portion where the angle decreased as x increased. With the pattern shown in Fig. 15A, the graph included at least two angle increase portions and at least two angle decrease portions.

As shown in Fig. 18, in the patterns shown in Fig. 17, even when the number x of the virtual straight line was different, the angle of the virtual straight line was constant.

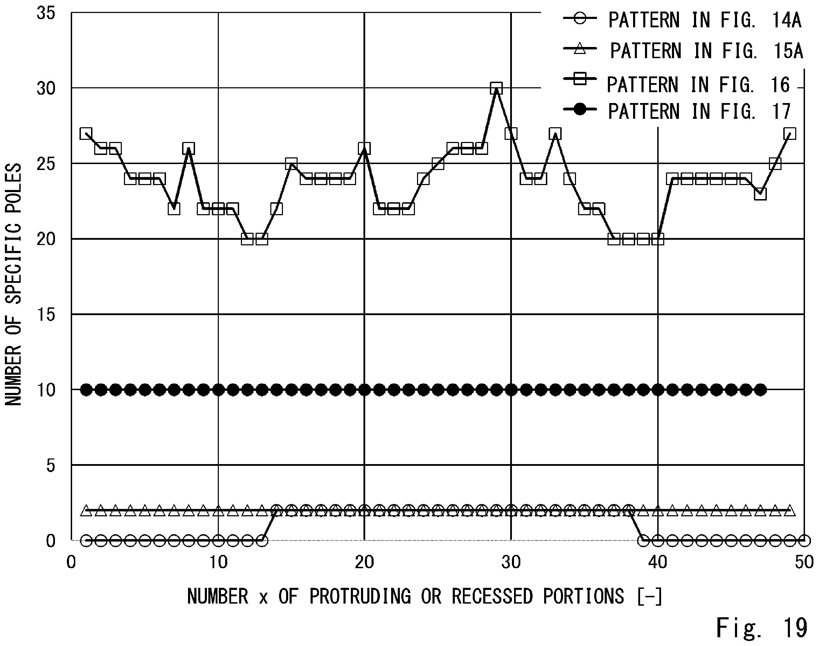

Fig. 19 is a graph showing an example of relationship between the number x of the protruding or recessed portion and the number of specific poles included in one protruding or recessed portion in each of the patterns shown in Fig. 14A, Fig. 15A, Fig. 16, and Fig. 17.

In the uneven layer, it is preferred that the number of the specific poles of the first to n-th protruding or recessed portions in a plan view changes at least partially. In the patterns shown in Fig. 14A and Fig. 16, the number of the specific poles of the first to n-th protruding or recessed portions in a plan view changes at least partially. In the uneven layer, it is preferred that the number of the specific poles of at least one protruding or recessed portion in a plan view is at least three. For example, in the pattern shown in Fig. 16, the number of the specific poles of the protruding or recessed portion in a plan view changes and is at least three, thus being preferable.

As described in the foregoing, the present invention can provide a laminate in which, when an angle of the laminate, a visual line, or a light source changes, a change in the brightness is different according to the in-plane position, leading to various changes in contrast, and the color is changed depending on the in-plane position, resulting in more complex changes in appearance, more stereoscopic visualization, and further superior designability.

### Examples

Hereinafter, the present invention is described based on Examples; however, the present invention is not limited thereto. Examples 1, 5, 6 and 9 to 11 are Examples, and Examples 2 to 4, 7, and 8 are Comparative Examples.

### [Materials]

Brevity codes of materials used for each Example are as follows.

### <Metal Plate for Die>

(M1) Ni metal plate (10 cm long, 10 cm wide, and 5 mm thick, produced by The Nilaco Corporation)

### <Release Agent>

(RA1) Optool HD-2100 produced by DAIKIN INDUSTRIES, LTD.

### <Curable Composition>

(R1) Ultraviolet ray curable composition obtained by blending tricyclodecanol acrylate ("A-DCP" produced by SHIN-NAKAMURA CHEMICAL CO, LTD.), urethane acrylate ("UA-122P" produced by SHIN-NAKAMURA CHEMICAL CO, LTD.), and 1-hydroxy-cyclohexyl-phenyl-keton ("IRGACURE 184" produced by BASF) at a mass ratio of 50:50:1
(R2) Transparent adhesive ("Photobond" produced by SUNRISE MSI CORPORATION)

### <Translucent Resin Film>

(F1) Polyethylene terephthalate (PET) film (10 cm long, 10 cm wide, and 125 µm thick, produced by PrinterPaperPro K.K.)
(F2) EVA film (10 cm long, 10 cm wide, and 0.4 mm thick, "AB film" produced by Bridgestone Corporation)

### <Pressure Sensitive Adhesive Tape>

(T1) Transparent pressure sensitive adhesive tape (10 cm long, 10 cm wide, and 10 µm thick in total (thickness of pressure sensitive adhesive layer: 4 µm, thickness of substrate PET film: 6 µm), "GL-10" produced by Nichiei Kako Co., Ltd.)

### <Glass Plate>

(G1) Float glass plate (10 cm long, 10 cm wide, and 1.8 mm thick, 1.52 in refractive index, "FL2" produced by AGC Inc.)

### [Example 1]

### (Production of Die (MM))

In Example 1, the Ni metal plate (M1) was subjected to a well-known drilling process to obtain a die (MM1) having an uneven structure on the surface consisting of a plurality of recessed portions in a meandering line shape in a plan view and a semicircular shape in a cross-sectional view, and a plurality of protruding portions formed in gaps between the plurality of recessed portions.

The planar pattern of the plurality of recessed portions was as schematically shown in Fig. 16. For the detailed description of the planar pattern, refer to the section "Description of Embodiments". Refer also to Fig. 19, which is a graph showing an example of relationship between the number x of the protruding or recessed portion and the number of specific poles included in one protruding or recessed portion in each of the patterns shown in Fig. 14A, Fig. 15A, Fig. 16, and Fig. 17.

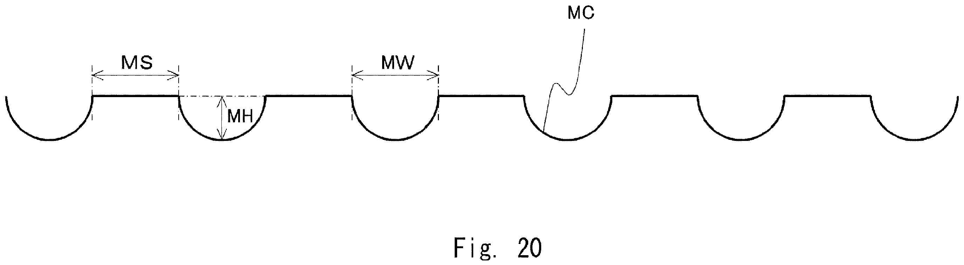

Fig. 20 shows a schematic cross-sectional view in an array direction of the plurality of recessed portions. In the drawing, the reference sign MC denotes a recessed portion on the die.

The die (MM) has a reversed pattern of a surface uneven pattern of an uneven structural body to be produced.

In Example 1, design was as follows. Both line end portions on the upper and lower sides of the drawing of the plurality of recessed portions extending in a meandering manner in the up-down direction of the drawing in the planar pattern illustrated in the drawing are referred to as "both line end portions of the plurality of recessed portions". The same applies to the plurality of protruding portions of the uneven structural body to be obtained. Since the pitch of the plurality of protruding or recessed portions was changed at least partially, data of the "both line end portions" is indicated with regard to the inter-recessed portion distance and the pitch of the die, and the inter-protruding portion distance and the pitch of the uneven structural body, unless otherwise specified. Note that, in the planar pattern illustrated in the drawing, the pitch is shown larger than the actual pattern to facilitate visual recognition.

Width of recessed portion (MW) (Corresponding to width of protruding portion (RW) of uneven structural body): 30 µm
Depth of recessed portion (MH) (Corresponding to height of protruding portion (RH) of uneven structural body): 15 µm (Half of width)
Inter-recessed portion distance (MS) of both line end portions of plurality of recessed portions (Corresponding to inter-protruding portion distance (RS) of both line end portions of plurality of protruding portions of uneven structural body): 30 µm
Pitch (MW + MS) of both line end portions of plurality of recessed portions (Corresponding to pitch (RW + RS) of both line end portions of plurality of protruding portions of uneven structural body): 60 µm

### (Molding of Uneven structural body (S))

The uneven structural body (S1) was molded by using the die (MM1) obtained.

The release agent (RA1) in an amount of 1 g was applied to the entire surface of the die (MM1) and dried at 80 °C for 30 minutes. Next, the curable composition (R1) in an amount of 5 g was applied to the entire surface of the die with the release agent (RA1) applied. In this process, the curable composition (R1) was applied such that all of the recessed portions formed on the die were filled and a layer was formed on the die. Next, the PET film (F1) as the supporting member was stacked on the layer formed of the curable composition (R1) so as not to trap air bubbles. Next, the curable composition (R1) was cured by irradiation with ultraviolet rays (365 nm) at an illuminance of 100 mW/m² for 10 seconds from the PET film (F1) side by using "UVLED" manufactured by CCS Inc.

The uneven structural body (S1) made of resin was thus molded having an uneven structure on the surface consisting of a plurality of protruding portions in a meandering line shape in a plan view and a semicircular shape in a cross-sectional view, and a plurality of recessed portions formed in gaps between the plurality of protruding portions. The planar pattern of the plurality of protruding portions of the uneven structural body (S1) thus obtained was as schematically shown in Fig. 16. The width of the protruding portion (RW), the height of the protruding portion (RH), the inter-protruding portion distance (RS), and the pitch of the protruding portions (RW + RS) correspond respectively to the width of the recessed portion (MW), the depth of the recessed portion (MH), the inter-recessed portion distance (MS), and the pitch of the recessed portions (MW + MS) of the die (MM1) used. These pieces of data are shown in Table 1. Note that the height of the protruding portion of the uneven structural body (S) obtained by this process is referred to as a "height upon molding". The inter-protruding portion distance (RS) and the pitch of the protruding portions (RW + RS) in the table are data of both line end portions.

### (Production of First Laminate (LA))

A first laminate (LA1) (laminate structure: PET film (F1) (supporting member)/uneven structural body (S1)), in which the PET film (F1) as the supporting member was overlaid on the face of the uneven structural body (S1) (cured product of the curable composition) on the opposite side to the uneven face, was peeled off from the die (MM1).

For the cross-sectional structure of the uneven structural body (S1), refer to the reference signs 11 and 20 in Fig. 1. Note that the cross-sectional shape of the protruding portion was semicircular at this moment.

### (Production of Second Laminate (LB))

The pressure sensitive adhesive tape (T1) was bonded onto the first laminate (LA1) by placing the pressure sensitive adhesive layer of the pressure sensitive adhesive tape (T1) on the uneven face of the uneven structural body (S1) of the first laminate (LA1), and pressing and rolling a rubber roller thereagainst. At this moment, the pressure sensitive adhesive tape (T1) was bonded flatly on the first laminate (LA1) such that the spaces in the plurality of recessed portions formed on the surface of the uneven structural body (S1) were left as the gas portions. A second laminate (LB1) including the gas-resin composite layer (laminate structure: PET film (F1) (supporting member)/uneven structural body (S1)/pressure sensitive adhesive tape (T1)) was thus obtained.

For the cross-sectional structure of the second laminate (LB1), refer to the reference signs 11, 20, 31, and 41 in Fig. 1. Note that, as illustrated in the drawing, during the process of laminating, the protruding portion in a semicircular shape in the cross-sectional view of the uneven structural body was compressed to have a flat head, whereby the height of the protruding portion (RH) was reduced from 15 µm, which was the height upon molding, to 13 µm. The height of the protruding portion of the second laminate (LB1) obtained by this process is referred to as a "height after compression".

Note that, in the gas-resin composite layer included in the second laminate (LB1), the width of the resin portion was the width of the protruding portion (RW), and the width of the gas portion (GW) was the inter-protruding portion distance (RS).

The height after laminating of the protruding portion (RH) and the width of the gas portion (GW) are shown in Table 1. The width of the gas portion (GW) in the table is data of both line end portions.

### (Production of Third Laminate (LC))

Printing for coloration was carried out with respect to the second laminate (LB1) by using a UV printer (UJF-6042MkII manufactured by MIMAKI ENGINEERING CO., LTD.).

An ink containing a cyan dye was applied onto the entire external face of the PET film (F1) of the second laminate (LB1) by ink-jet printing and cured by using a UV lamp, to form the tinted layer on the top side.

An ink containing a magenta dye was applied onto the entire external face of the pressure sensitive adhesive tape (T1) of the second laminate (LB1) by ink-jet printing and cured by using a UV lamp, to form the tinted layer on the back side.

A third laminate (LC1) having the structure illustrated in Fig. 1 (laminate structure: tinted layer on top side (cyan)/PET film (F1) (supporting member)/uneven structural body (S1)/pressure sensitive adhesive tape (T1)/tinted layer on back side (magenta)) was thus produced.

A reflection factor was measured from the cyan tinted layer side by using a spectral colorimeter (CM-5) manufactured by Konica Minolta, Inc., by the specular component exclude method (SCE method) for each measurement wavelength from 390 nm to 620 nm at 10 nm intervals, and then an average value and a variance value of the reflection factor were obtained, which were 3.8% and 1.8%² respectively.

In a similar manner to the foregoing, a reflection factor was measured from the magenta tinted layer side by using a spectral colorimeter (CM-5) manufactured by Konica Minolta, Inc., by the specular component exclude method (SCE method) for each measurement wavelength from 390 nm to 620 nm at 10 nm intervals, and then an average value and a variance value of the reflection factor were obtained, which were 3.2% and 1.7%² respectively.

A reflection factor was measured from the cyan tinted layer side and from the magenta tinted layer side by using a spectral colorimeter (CM-5) manufactured by Konica Minolta, Inc., by the specular component exclude method (SCE method) for each measurement wavelength from 390 nm to 620 nm at 10 nm intervals, and then a variance value of a difference between the reflection factor from the cyan tinted layer side and the reflection factor from the magenta tinted layer side was obtained, which was 3.3%².

Results of these evaluations are shown in Table 3.

### (Production of Fourth Laminate (LD))

A preliminary laminate was obtained by stacking the EVA film (F2) and the glass plate (G1) sequentially on each of both faces of the third laminate (LC1). The preliminary laminate was put into a film bag, an opening of the bag was sealed by heating in a vacuum to be vacuum-packaged, and the preliminary laminate was thermocompressively bonded at 100 °C for two hours. The laminate after the thermocompression bonding was removed from the bag to obtain a fourth laminate (LD1) having the laminate structure illustrated in Fig. 2 (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side (magenta)/second EVA film (F2)/second glass plate (G1) (glass plate on back side)).

Table 2 shows the laminate configuration of the laminate (in Example 1, the third laminate (LC1)) prior to sandwiching by a pair of glass plates. In the table, "inter-tinted layer structure" refers to a laminate structure between the tinted layer on the top side and the tinted layer on the back side. For the example in which one of the tinted layer on the top side and the tinted layer on the back side was not formed, a laminate structure of a portion corresponding to the "inter-tinted layer structure" is indicated.

Note that the "top side (visually recognized side)" and the "back side" of the third laminate (LC1) and the fourth laminate (LD1) are defined for the sake of expediency, and both sides may be used as the top side (visually recognized side).

### [Examples 2 to 4]

### (Production of Third and Fourth Laminates (LC), (LD))

In each of Examples 2 to 4, a tinted layer of the color indicated in Table 2 was formed by a similar method to Example 1 on the entirety of at least one external face of the second laminate (LB1) obtained as in Example 1 to obtain the third laminates (LC2) to (LC4). Fourth laminates (LD2) to (LD4) for comparative purposes were obtained by overlaying the EVA film (F2) and the glass plate (G1) on each of both faces of the third laminate (LC) obtained, by the similar method to Example 1.

The laminate structure of the fourth laminate (LD) of each Example was as follows.

Example 2: (LD2) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/second EVA film (F2)/second glass plate (G1) (glass plate on back side))

Example 3: (LD3) (laminate structure: first glass plate (G1) (glass plate on top side)/first EVA film (F2)/PET film (F1) (supporting member)/uneven structural body (S1)/pressure sensitive adhesive tape (T1)/tinted layer on back side (magenta)/second EVA film (F2)/second glass plate (G1) (glass plate on back side))

Example 4: (LD4) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side (tinted layer on back side, cyan)/second EVA film (F2)/second glass plate (G1) (glass plate on back side))

For each of Examples 2 to 4, in a similar manner to Example 1, a reflection factor was measured from each of the tinted layer on the top side and the tinted layer on the back side, by the specular component exclude method (SCE method) for each measurement wavelength from 390 nm to 620 nm at 10 nm intervals, and then an average value and a variance value of the reflection factor were obtained.

For each of Examples 2 to 4, in a similar manner to Example 1, a reflection factor was measured from each of the tinted layer on the top side and the tinted layer on the back side, by the specular component exclude method (SCE method) for each measurement wavelength from 390 nm to 620 nm at 10 nm intervals, and then a variance value of a difference between the reflection factor from the tinted layer on the top side and the reflection factor from the tinted layer on the back side was obtained.

Results of these evaluations are shown in Table 3.

### [Evaluations of Examples 1 to 4]

A designability of the fourth laminate (LD) obtained in each of Examples 1 to 4 was visually evaluated. The fourth laminate (LD) obtained was observed from the first glass plate (G1) side, while changing the orientation.

In all of Examples, the tone changed in a different manner depending on the in-plane position, leading to various changes in contrast. In particular, when, on an observation face seen by an observer, the width direction of the gas portion was the vertical direction, the longitudinal direction of the gas portion was the horizontal direction, and the laminate was rotated laterally within a range from - 45° to 45° around an axis in the vertical direction passing through the center in the horizontal direction, the contrast changed remarkably, leading to stereoscopic perception like a mountain range in which mountains and valleys were lined up repeatedly.

With the fourth laminates (LD2) to (LD4) obtained in Example 2 in which the tinted layer on the back side was not formed, Example 3 in which the tinted layer on the top side was not formed, and Example 4 in which the tinted layer on the top side and the tinted layer on the back side were formed in the same color, changes in contrast were observed but no change in color was observed when the orientation was changed.

To the contrary, in the fourth laminate (LD1) obtained in Example 1 in which the tinted layer on the top side and the tinted layer on the back side were formed in different colors to sandwich the uneven structural body, changes in color could be observed in addition to changes in contrast when the orientation was changed, resulting in more complex changes in appearance, more stereoscopic visualization, and a further superior designability.

The fourth laminate (LD1) obtained in Example 1 exhibited a blue color when observed from the first glass plate (G1) side, and a purple color when observed from the second glass plate (G1) side. The fourth laminate (LD1) was confirmed to be a reversible laminate allowing a user or an observer to freely select the first glass plate (G1) side or the second glass plate (G1) side as the top side (visually recognized side) according to taste or mood.

Results of the evaluations are shown in Table 3. The evaluation of appearance was visually conducted from viewpoints of the stereoscopic visualization due to change in contrast, the stereoscopic visualization due to change in color, and overall visualization based thereon, on a four-point scale from Excellent, Good, Fair, and Poor.

### [Examples 5 to 8]

### (Production of Third and Fourth Laminates (LC), (LD))

In Example 5, a white layer containing a white pigment was formed as the scattering layer over an entire face of the tinted layer on the back side of the third laminate (LC1) obtained in Example 1, to obtain the third laminate (LC5) having the cross-sectional structure as illustrated in Fig. 3.

In Example 6, a white layer was formed as the scattering layer on an entire face of the tinted layer on the back side of the third laminate (LC1) obtained in Example 1, and a black layer containing a black pigment was further formed thereon as the backing print layer to obtain the third laminate (LC6) having the cross-sectional structure as illustrated in Fig. 4.

In Example 7, a white layer containing a white pigment was formed as the scattering layer on an entire face of the pressure sensitive adhesive tape (T1) of the third laminate (LC2) obtained in Example 2, to obtain the third laminate (LC7).

In Example 8, a white layer containing a white pigment was formed as the scattering layer on an entire face of the tinted layer on the back side of the third laminate (LC4) obtained in Example 4, to obtain the third laminate (LC8).

In Examples 5 to 8, the white layer was formed by ink-jet printing with an ink containing a white pigment by using a UV printer (UJF-6042MkII manufactured by MIMAKI ENGINEERING CO., LTD.), and curing by a UV lamp.

In Examples 5 to 8, the black layer was formed by ink-jet printing with a black ink by using a UV printer (UJF-6042MkII manufactured by MIMAKI ENGINEERING CO., LTD.), and curing by a UV lamp.

In each of Examples 5 to 8, the fourth laminates (LD5) to (LD8) were obtained by overlaying the EVA film (F2) and the glass plate (G1) on each of both faces of the third laminate (LC) obtained, by the similar method to Example 1. The laminate structure of the fourth laminate (LD) of each Example was as follows.

Example 5: (LD5) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side (magenta)/scattering layer (white layer)/second EVA film (F2)/second glass plate (G1) (glass plate on back side))

Example 6: (LD6) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side (magenta)/scattering layer (white layer)/backing print layer (black layer)/second EVA film (F2)/second glass plate (G1) (glass plate on back side))

Example 7: (LD7) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/scattering layer (white layer)/second EVA film (F2)/second glass plate (G1) (glass plate on back side))

Example 8: (LD8) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side/scattering layer (white layer)/second EVA film (F2)/second glass plate (G1) (glass plate on back side))

### [Evaluations of Examples 5 to 8]

A designability of the fourth laminate (LD) obtained in each of Examples 5 to 8 was visually evaluated. The evaluation was made in a similar manner to Examples 1 to 4, by observing the fourth laminate (LD) obtained from the first glass plate (G1) side, while changing the orientation. Results of the evaluations are shown in Table 3.

In the fourth laminates (LD5), (LD6) obtained in Examples 5, 6 in which the tinted layer on the top side and the tinted layer on the back side were formed in different colors to sandwich the uneven structural body, as with Example 1, the tone changed in a different manner depending on the in-plane position, leading to various changes in contrast. In particular, when, on an observation face seen by an observer, the width direction of the gas portion was the vertical direction, the longitudinal direction of the gas portion was the horizontal direction, and the laminate was rotated laterally within a range from -45° to 45° around an axis in the vertical direction passing through the center in the horizontal direction, the contrast changed remarkably, leading to stereoscopic perception like a mountain range in which mountains and valleys were lined up repeatedly. In the fourth laminates (LD5), (LD6) obtained in these Examples, changes in color could be observed in addition to changes in contrast when the orientation was changed, resulting in more complex changes in appearance, more stereoscopic visualization, and further superior designability.

In the fourth laminates (LD5), (LD6) obtained in these Examples, by forming the white layer as the scattering layer on the tinted layer on the back side, the color observed from the first glass plate (G1) side becomes brighter than in Example 1.

In the configuration in which the tinted layer on the top side and the tinted layer on the back side are provided to sandwich the uneven structural body, and the scattering layer is arranged behind the tinted layer on the back side, light having passed through both the tinted layer on the top side and the tinted layer on the back side is scattered at the surface of the scattering layer. In the fourth laminates (LD5), (LD6) obtained in Examples 5 and 6, light of a certain wavelength range in light having passed through the tinted layer on the top side was reflected at the surface of the uneven layer, while light of a wavelength range having passed through both the tinted layer on the top side and the tinted layer on the back side was scattered at the surface of the scattering layer and wavelength ranges of these types of light were different, whereby brighter colors could be exhibited. In Example 6, the laminate producing the foregoing effects and further having light shielding properties was obtained due to further forming the black layer as the backing print layer behind the scattering layer.

In the fourth laminates (LD7), (LD8) obtained in Examples 7 and 8, changes in contrast were scarcely observed even when the orientation was changed. This is considered to be due to the anisotropic reflection in the uneven layer that was relatively weak, as a result of providing only one tinted layer resulting in similar spectra of the light reflected at the surface of the uneven layer and the light scattered at the surface of the scattering layer.

### [Example 9]

### (Production of Third and Fourth Laminates (LC), (LD))

The third laminate (LC9) was obtained in a similar manner to Example 1, except for applying, as the tinted layer on the back side, a mixed ink obtained by mixing a magenta ink and a white pigment ink at a mass ratio of 9:1 over the entire face of the pressure sensitive adhesive tape (T1) of the second laminate (LB1) by screen printing and curing by a UV lamp, by using a UV printer (UJF-6042MkII manufactured by MIMAKI ENGINEERING CO., LTD.). The fourth laminate (LD9) was obtained by overlaying the EVA film (F2) and the glass plate (G1) on each of both faces of the third laminate (LC9) obtained, by the similar method to Example 1. The laminate structure of the fourth laminate (LD9) thus obtained was as follows.

Example 9: (LD9) (laminate structure: first glass plate (G1) (glass plate on top side)/first EVA film (F2)/tinted layer on top side (cyan)/PET film (F1) (supporting member)/uneven structural body (S1)/pressure sensitive adhesive tape (T1)/tinted layer on back side (mixture of magenta and white (mass ratio 9:1))/second EVA film (F2)/second glass plate (G1) (glass plate on back side))

In a similar manner to Example 1, a reflection factor was measured from each of the tinted layer on the top side and the tinted layer on the back side, by the specular component exclude method (SCE method) for each measurement wavelength from 390 nm to 620 nm at 10 nm intervals, and then an average value and a variance value of the reflection factor were obtained.

In a similar manner to Example 1, a reflection factor was measured from each of the tinted layer on the top side and the tinted layer on the back side, by the specular component exclude method (SCE method) for each measurement wavelength from 390 nm to 620 nm at 10 nm intervals, and then a variance value of a difference between the reflection factor from the tinted layer on the top side and the reflection factor from the tinted layer on the back side was obtained.

Results of these evaluations are shown in Table 3.

### [Evaluation of Example 9]

Design property of the fourth laminate (LD9) obtained in Example 9 was visually evaluated. The evaluation was made in a similar manner to Examples 1 to 4, by observing the fourth laminate (LD) obtained from the first glass plate (G1) side, while changing the orientation. Results of the evaluations are shown in Table 3.

In the fourth laminate (LD9) obtained in Example 9 in which the tinted layer on the top side and the tinted layer on the back side were formed in different colors to sandwich the uneven structural body, as with Example 1, the tone changed in a different manner depending on the in-plane position, leading to various changes in contrast. In particular, when, on an observation face seen by an observer, the width direction of the gas portion was the vertical direction, the longitudinal direction of the gas portion was the horizontal direction, and the laminate was rotated laterally within a range from -45° to 45° around an axis in the vertical direction passing through the center in the horizontal direction, the contrast changed remarkably, leading to stereoscopic perception like a mountain range in which mountains and valleys were lined up repeatedly. In the fourth laminate (LD9) obtained in this Example, changes in color could be observed in addition to changes in contrast when the orientation was changed, resulting in more complex changes in appearance, more stereoscopic visualization, and further superior designability.

In the fourth laminate (LD9) obtained in this Example, by forming the tinted layer serving as the scattering layer by using the ink obtained by mixing the magenta ink and the white pigment ink at a mass ratio of 9:1 as the tinted layer on the back side, the color observed from the first glass plate (G1) side becomes brighter than in Example 1.

In the configuration in which the tinted layer on the top side and the tinted layer on the back side are provided to sandwich the uneven structural body, and the tinted layer on the back side serves as the scattering layer, light having passed through the tinted layer on the top side and incident on the tinted layer on the back side is scattered in the tinted layer on the back side serving as the scattering layer. In the fourth laminate (LD9) obtained in Example 9, due to different absorption wavelength ranges of the tinted layer on the top side and the tinted layer on the back side, light of a certain wavelength range in light having passed through the tinted layer on the top side was reflected at the surface of the uneven layer, while light of a wavelength range having passed through both the tinted layer on the top side and the tinted layer on the back side was scattered at the surface of the scattering layer and wavelength ranges of these types of light were different, whereby brighter colors could be exhibited.

### [Example 10]

### (Production of Fifth Laminate (LE))

A fifth laminate (LE10) (laminate structure: ZnS reflective layer/uneven structural body (S1)/PET film (F1) (supporting member)) was produced by forming, as the reflective layer, a ZnS film (refractive index: 2.3) of 60 nm in thickness by sputtering on the uneven face of the uneven structural body (S1) of the first laminate (LA1) obtained in Example 1.

### (Production of Sixth Laminate (LF))

A tinted layer of the color indicated in Table 2 was formed on each of both faces of the fifth laminate (LE10) (the external face of the ZnS reflective layer and the external face of the PET film (F1)) by using a UV printer (UJF-6042MkII manufactured by MIMAKI ENGINEERING CO., LTD.) (for the cross-sectional structure, refer to Fig. 5).

Furthermore, in a similar manner to Example 6, a white layer was formed as the scattering layer on the tinted layer on the back side, and a black layer was further formed thereon as the backing print layer. The sixth laminate (LF10) was thus produced (laminate structure: tinted layer on top side (cyan)/ZnS reflective layer/uneven structural body (S1)/PET film (F1) (supporting member)/tinted layer on back side (magenta)/scattering layer (white layer)/backing print layer (black layer)).

### (Production of Seventh Laminate (LG))

The seventh laminate (LG10) was obtained by overlaying the EVA film (F2) and the glass plate (G1) on each of both faces of the sixth laminate (LF10) obtained, by the similar method to Example 1. The laminate structure of the seventh laminate (LG10) thus obtained was as follows.

Example 10: (LG10) (laminate structure: first glass plate (G1) (glass plate on top side)/first EVA film (F2)/tinted layer on top side (cyan)/ZnS reflective layer/uneven structural body (S1)/PET film (F1) (supporting member)/tinted layer on back side (magenta)/scattering layer (white layer)/backing print layer (black layer)/second EVA film (F2)/second glass plate (G1) (glass plate on back side))

### [Evaluation of Example 10]

A designability of the seventh laminate (LG10) obtained in Example 10 was visually evaluated. The evaluation was made in a similar manner to Examples 1 to 4, by observing the seventh laminate (LG10) obtained from the first glass plate (G1) side, while changing the orientation. Results of the evaluations are shown in Table 3.

In the seventh laminate (LG10) obtained in Example 10 in which the tinted layer on the top side and the tinted layer on the back side were formed in different colors to sandwich the uneven structural body, as with Example 1, the tone changed in a different manner depending on the in-plane position, leading to various changes in contrast. In particular, when, on an observation face seen by an observer, the width direction of the gas portion was the vertical direction, the longitudinal direction of the gas portion was the horizontal direction, and the laminate was rotated laterally within a range from -45° to 45° around an axis in the vertical direction passing through the center in the horizontal direction, the contrast changed remarkably, leading to stereoscopic perception like a mountain range in which mountains and valleys were lined up repeatedly. In the seventh laminate (LG10) obtained in this Example, changes in color could be observed in addition to changes in contrast when the orientation was changed, resulting in more complex changes in appearance, more stereoscopic visualization, and further superior designability.

The seventh laminate (LG10) obtained in Example 10 exhibited greater changes in color, more stereoscopic visualization, and further superior designability compared to the fourth laminate (LD6) obtained in Example 6, when the orientation was changed. This is considered to be due to the tinted layer on the top side formed on the uneven face of the reflective layer formed along the uneven face of the uneven structural body, resulting in changes in thickness of the tinted layer on the top side depending on the in-plane position, and changes in thickness of the tinted layer on the top side depending on an angle of a visual line.

### [Example 11]

### (Production of Fourth Laminate (LD))

The fourth laminate (LD11) was produced in a similar manner to the fourth laminate (LD1) of Example 1 except for changing the design of the tinted layers on the top side and the back side as follows.

The tinted layer on the top side had a configuration in which a plurality of cyan tinted portions each in a square shape of 20 mm by 20 mm in a plan view and a plurality of magenta tinted portions each in a square shape of 20 mm by 20 mm in a plan view were arranged in a checkered pattern.

The tinted layer on the back side had a configuration in which a plurality of red tinted portions each in a square shape of 20 mm by 20 mm in a plan view and a plurality of green tinted portions each in a square shape of 20 mm by 20 mm in a plan view were arranged in a checkered pattern.

The design was carried out such that the cyan tinted portion on the top side was opposite to the red tinted portion on the back side, and the magenta tinted portion on the top side was opposite to the green tinted portion on the back side.

For a portion where the cyan tinted portion overlaps the red tinted portion in the fourth laminate (LD11), a reflective spectrum and a transmission spectrum were measured by using a spectral colorimeter (CM-5) manufactured by Konica Minolta, Inc., by the specular component exclude method (SCE method) for each measurement wavelength from 360 nm to 740 nm at 10 nm intervals. Also for a portion where the magenta tinted portion overlaps the green tinted portion, a reflective spectrum and a transmission spectrum were measured in a similar manner.

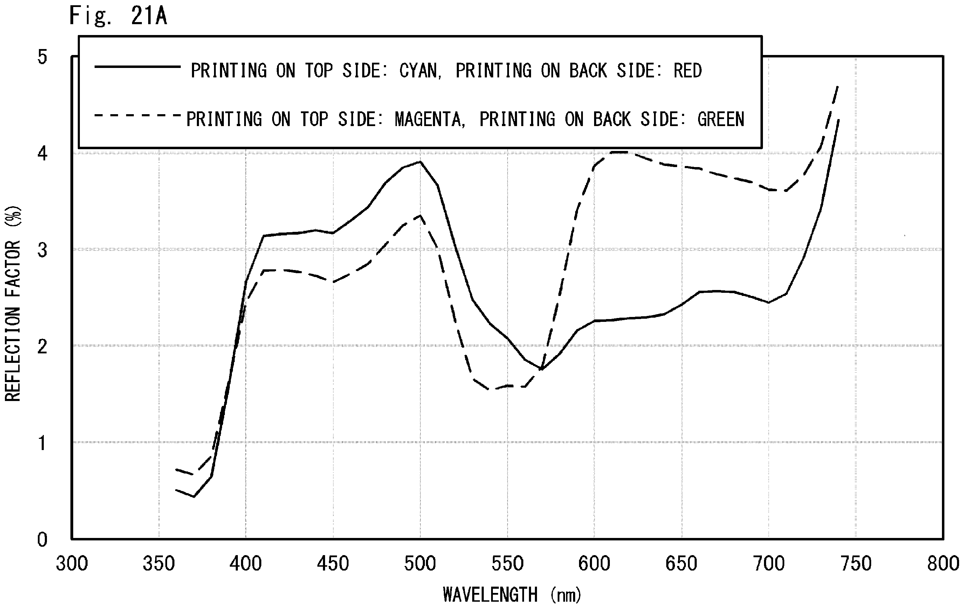

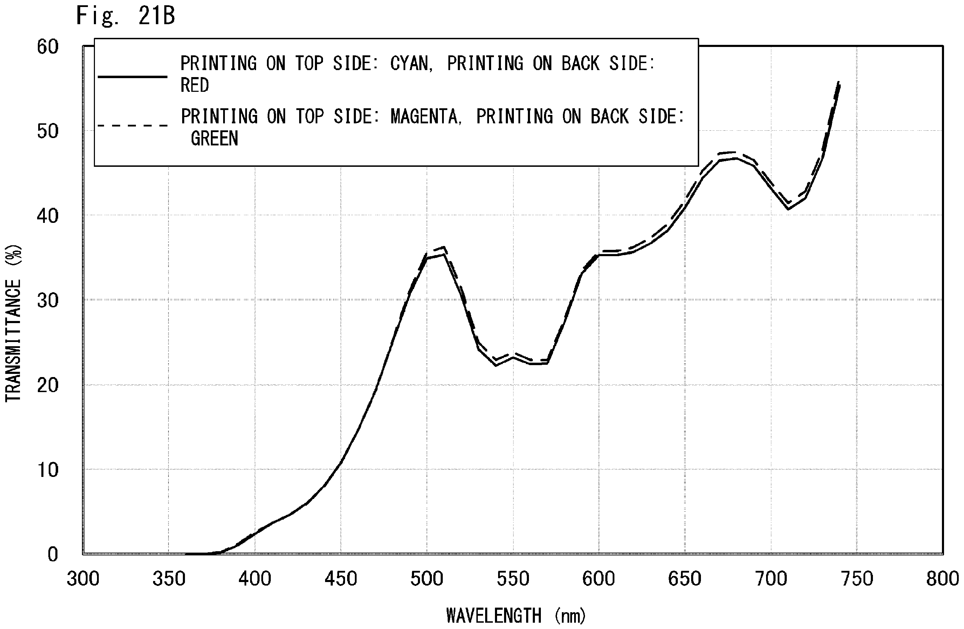

The reflective spectra are shown in Fig. 21A, and the transmission spectra are shown in Fig. 21B. The portion where the cyan tinted portion overlaps the red tinted portion and the portion where the magenta tinted portion overlaps the green tinted portion were confirmed to have largely different reflective spectra and substantially the same transmission spectrum.

### (Production of Eighth Laminate (LH))

The transparent adhesive (R2) was applied on the glass plate on the surface of a commercially available liquid crystal display, and the fourth laminate (LD11) was overlaid thereon while taking care as much as possible not to trap air bubbles. At this moment, the second glass plate (G1) (glass plate on back side) of the fourth laminate (LD11) was in contact with the liquid crystal display.

Next, the transparent adhesive (R2) was cured by irradiation with ultraviolet rays (365 nm) at an illuminance of 100 mW/m² for 10 seconds from the first glass plate (G1) (glass plate on top side) side of the fourth laminate (LD11) by using "UVLED" manufactured by CCS Inc., to produce the eighth laminate (LH11) (laminate structure: first glass plate (G1) (glass plate on top side)/first EVA film (F2)/tinted layer on top side (checkered pattern of cyan and magenta)/PET film (F1) (supporting member)/uneven structural body (S1)/pressure sensitive adhesive tape (T1)/tinted layer on back side (checkered pattern of red and green)/second EVA film (F2)/second glass plate (G1) (glass plate on back side)/transparent adhesive (R2)/liquid crystal display).

### [Evaluation of Example 11]

A designability of the eighth laminate (LH11) obtained in Example 11 was visually evaluated. The evaluation was made in a similar manner to Examples 1 to 4, by observing the eighth laminate (LH11) obtained from the first glass plate (G1) (glass plate on top side) side, while changing the orientation. Results of the evaluations are shown in Table 3. When a screen of the liquid crystal display was unlit, the checkered pattern of cyan and magenta was visually recognized as with the fourth laminate (LD11), whereby excellent designability was attained. When the screen of the liquid crystal display was lit, the checkered pattern of cyan and magenta was not visually recognized, thus allowing the display content of the liquid crystal display to be visually recognized clearly through the eighth laminate (LH11).

Since the portion where the cyan tinted portion overlaps the red tinted portion and the portion where the magenta tinted portion overlaps the green tinted portion had largely different reflective spectra, it was confirmed that the checkered pattern on the top side could be visually recognized clearly when the screen of the liquid crystal display was unlit.

Since the portion where the cyan tinted portion overlaps the red tinted portion and the portion where the magenta tinted portion overlaps the green tinted portion had substantially the same transmission spectrum, it was confirmed that the checkered pattern was not visually recognized and the display content of the liquid crystal display to be visually recognized clearly when the liquid crystal display was lit.

A laminate could thus be attained, that permitted decoration and improved designability without negatively influencing visibility of the screen of the liquid crystal display.

**[Table 1]**

| Example | Protruding portion of uneven structural body | | | | | | Gas portion of second laminate |
|---|---|---|---|---|---|---|---|
| | Planar pattern | Width (RW) (µm) | Height (RH) (µm) | | Inter-protruding portion distance | RW+RS | Width |
| | | | | | (RS) | (µm) | (GW) |
| | | | Upon molding | After compression | | | |
| | | | | | (µm) | | (µm) |
| 1 to 11 | Fig. 16 | 30 | 15 | 13 | 30 | 60 | 30 |

**[Table 2]**

| Example | Laminate to be evaluated | Tinted layer on top side | Structure between tinted layers | Tinted layer on back side | Scattering layer | Backing print layer |
|---|---|---|---|---|---|---|
| 1 | LD1 | Cyan (Dye) | PET/Uneven structural body/Pressure sensitive adhesive tape | Magenta (Dye) | | |
| 2 | LD2 | Cyan (Dye) | PET/Uneven structural body/Pressure sensitive adhesive tape | | | |
| 3 | LD3 | | PET/Uneven structural body/Pressure sensitive adhesive tape | Magenta (Dye) | | |
| 4 | LD4 | Cyan (Dye) | PET/Uneven structural body/Pressure sensitive adhesive tape | Cyan (Dye) | | |
| 5 | LD5 | Cyan (Dye) | PET/Uneven structural body/Pressure sensitive adhesive tape | Magenta (Dye) | White (Pigment) | |
| 6 | LD6 | Cyan (Dye) | PET/Uneven structural body/Pressure sensitive adhesive tape | Magenta (Dye) | White (Pigment) | Black (Pigment) |
| 7 | LD7 | Cyan (Dye) | PET/Uneven structural body/Pressure sensitive adhesive tape | | White (Pigment) | |
| 8 | LD8 | Cyan (Dye) | PET/Uneven structural body/Pressure sensitive adhesive tape | Cyan (Dye) | White (Pigment) | |
| 9 | LD9 | Cyan (Dye) | PET/Uneven structural body/Pressure sensitive adhesive tape | Mixture of magenta (dye) and white (pigment) | | |
| 10 | LG10 | Cyan (Dye) | Reflective layer/Uneven structural body/PET | Magenta (Dye) | White (Pigment) | Black (Pigment) |
| 11 | LH11 | Checkered pattern of cyan (dye) and magenta (dye) | PET/Uneven structural body/Pressure sensitive adhesive tape | Checkered pattern of red (dye) and green (dye) | | |

**[Table 3]**

| Example | Laminate to be evaluated | Average value of reflection factor of reflective layer measured from first tinted layer side | Variance value of reflection factor of reflective layer measured from first tinted layer side | Average value of reflection factor of reflective layer measured from second tinted layer side | Variance value of reflection factor of reflective layer measured from second tinted layer side | Variance value of difference between reflection factor of reflective layer measured from first tinted layer side and reflection factor of reflective layer measured from second tinted layer side (%²) | Stereoscopic visualization | Change in color | Overall evaluation |
|---|---|---|---|---|---|---|---|---|---|
| | | (%) | (%²) | (%) | (%²) | | | | |
| 1 | LD1 | 3.8 | 1.8 | 3.2 | 1.7 | 3.3 | Good | Good | Good |
| 2 | LD2 | 3.8 | 1.8 | 3.8 | 0.8 | 0.1 | Good | Poor | Fair |
| 3 | LD3 | 3.2 | 0.8 | 3.4 | 1.7 | 0.2 | Good | Poor | Fair |
| 4 | LD4 | 3.8 | 1.8 | 3.8 | 1.8 | 0.0 | Good | Poor | Fair |
| 5 | LD5 | | | | | | Good | Good | Good |
| 6 | LD6 | | | | | | Good | Good | Good |
| 7 | LD7 | | | | | | Poor | Poor | Poor |
| 8 | LD8 | | | | | | Poor | Poor | Poor |
| 9 | LD9 | 3.8 | 1.8 | 4.7 | 0.3 | 2 | Good | Good | Good |
| 10 | LG10 | | | | | | Excellent | Excellen | Excellent |
| 11 | LH11 | | | | | | Good | Good | Good |

The present application claims the priority from Japanese Patent Application No. 2020-049285 filed on March 19, 2020, the disclosure of which is incorporated herein by reference in its entirety.

### Reference Signs List

1 to 5 : FIRST TO FIFTH LAMINATES, 11, 41 : SUPPORTING MEMBER, 20 : UNEVEN STRUCTURAL BODY, 21 : FIRST FLAT LAYER, 22 : UNEVEN LAYER (POSSIBLY SERVING AS REFLECTIVE LAYER), 22A : PROTRUDING PORTION, 22B : RECESSED PORTION, 31 : SECOND FLAT LAYER, 32 : REFLECTIVE LAYER, 50 : FIRST TINTED LAYER, 51, 52 : TINTED PORTION, 60 : SECOND TINTED LAYER, 61, 62 : TINTED PORTION, 81 : SCATTERING LAYER, 91 : BACKING PRINT LAYER, 111, 121 : PROTRUDING OR RECESSED PORTION.

## Claims

1. A laminate comprising:
a reflective layer; and
a first tinted layer and a second tinted layer formed to sandwich the reflective layer in a cross-sectional view, wherein:
at least one of the first tinted layer and the second tinted layer is translucent;
the first tinted layer includes a tinted portion that absorbs light of at least a part of a wavelength range from 390 to 620 nm; and
the second tinted layer includes, in a position opposite to the tinted portion of the first tinted layer, a tinted portion that absorbs light of at least a part of a wavelength range from 390 to 620 nm and exhibits a color different from the tinted portion of the first tinted layer.

2. The laminate according to Claim 1, further comprising an uneven structural body between the first tinted layer and the second tinted layer, the uneven structural body containing a resin and having on a surface an uneven layer with at least three linear protruding or recessed portions formed side-by-side at a pitch of no greater than 1,000 µm in a plan view.

3. The laminate according to Claim 2, wherein
a resin layer is overlaid immediately above the uneven layer of the uneven structural body, with spaces inside the recessed portions of the uneven layer being left as gas portions, and
the reflective layer comprises the uneven layer of the uneven structural body and the gas portions.

4. The laminate according to Claim 2, wherein the reflective layer is translucent and is formed to have an uneven surface along an uneven surface of the uneven layer of the uneven structural body.

5. The laminate according to Claim 4, wherein one of the first tinted layer and the second tinted layer is formed in contact with the uneven surface of the reflective layer.

6. The laminate according to Claim 5, wherein
the laminate is visually recognized by a user or an observer from one side, and
one of the first tinted layer and the second tinted layer on a visually recognized side is formed in contact with the uneven surface of the reflective layer.

7. The laminate according to any one of Claims 1 to 6, wherein when a reflection factor of the reflective layer is measured by a specular component exclude method for each measurement wavelength from 390 nm to 620 nm at 10 nm intervals, in the same in-plane position, an average value of the reflection factor of the reflective layer measured from the first tinted layer side and an average value of the reflection factor of the reflective layer measured from the second tinted layer side are both 0.5% or greater.

8. The laminate according to any one of Claims 1 to 7, wherein when a reflection factor of the reflective layer is measured by a specular component exclude method for each measurement wavelength from 390 nm to 620 nm at 10 nm intervals, in the same in-plane position, a variance value of a difference between the reflection factor of the reflective layer measured from the first tinted layer side and the reflection factor of the reflective layer measured from the second tinted layer side is 0.3%² or greater.

9. The laminate according to any one of Claims 1 to 8, wherein
the laminate is visually recognized by a user or an observer from one side, and
one of the first tinted layer and the second tinted layer on an opposite side to the visually recognized side contains a pigment.

10. The laminate according to any one of Claims 1 to 9, wherein
the laminate is visually recognized by a user or an observer from one side, and includes a scattering layer on a reverse side of one of the first tinted layer and the second tinted layer on an opposite side to the visually recognized side.

11. The laminate according to any one of Claims 1 to 10, further comprising a supporting member made of resin or glass.

12. The laminate according to any one of Claims 1 to 11, wherein the laminate is for decoration of a display apparatus.
